# EUROPÄISCHE PATENTSCHRIFT

(11) **EP 2 049 708 B1**
(45) Veröffentlichungstag und Bekanntmachung des Hinweises auf die Patenterteilung: **21.06.2017**
(21) Anmeldenummer: 07787669.6
(22) Anmeldetag: 18.07.2007
(51) Int. Cl.: C23C 22/08, C09D 5/12, C23C 22/13, C23C 22/17, C23C 22/20, C23C 22/22, C23C 22/36

(54) **VERFAHREN ZUM PASSIVIEREN VON METALLISCHEN OBERFLÄCHEN MIT PHOSPHORSÄURE- UND/ODER PHOSPHONSÄUREGRUPPEN AUFWEISENDEN COPOLYMEREN**
METHOD OF PASSIVATING METALLIC SURFACES BY MEANS OF COPOLYMERS HAVING PHOSPHORIC ACID AND/OR PHOSPHONIC ACID GROUPS
PROCÉDÉ DE PASSIVATION DE SURFACES MÉTALLIQUES AVEC DES COPOLYMÈRES COMPORTANT DES GROUPEMENTS ACIDE PHOSPHORIQUE ET/OU ACIDE PHOSPHONIQUE

(30) Priorität: 25.07.2006 EP 06117802
(43) Veröffentlichungstag der Anmeldung: 22.04.2009
(73) Patentinhaber: BASF SE, 67056 Ludwigshafen am Rhein (DE)
(72) Erfinder: KLIPPEL, Frank, 67067 Ludwigshafen (DE); GÖTHLICH, Alexander, 68163 Mannheim (DE); SCHORNICK, Gunnar, 67271 Neuleiningen (DE); FEHRINGER, Dietrich, 69234 Dielheim (DE); HEIDENFELDER, Thomas, 67125 Dannstadt-schauernheim (DE); WITTELER, Helmut, 67157 Wachenheim (DE); BERTKAU, Walter, 67069 Ludwigshafen (DE)
(74) Vertreter: BASF IP Association
(86) Internationale Anmeldenummer: PCT/EP2007/057406
(87) Internationale Veröffentlichungsnummer: WO 2008/012248

(56) Entgegenhaltungen:
- WO-A-2004/074372
- DE-A1-102004 041 127
- DE-A1-102005 027 567
- DE-A1-102005 027 568
- GB-A- 2 347 678

## Beschreibung

Die vorliegende Erfindung betrifft ein Verfahren zum Passivieren von metallischen Oberflächen, eine zur Ausführung des Verfahrens geeignete saure Zubereitung, welche mindestens Wasser sowie ein Copolymer aus funktionalisierten (Meth)acrylsäureestern, Phosphorsäure- und/oder Phosphonsäuregruppen aufweisenden Monomeren, COOH-Gruppen aufweisenden Monomeren sowie gegebenenfalls weitere Monomeren umfasst, sowie das besagte Copolymer.

Zur Herstellung von flächigen metallischen Werkstücken wie beispielsweise Automobilteilen, Karosserieteilen, Geräteverkleidungen, Fassadenverkleidungen, Deckenverkleidungen oder Fensterprofilen werden als Rohmaterial heutzutage üblicherweise lange Metallbänder eingesetzt, die durch Heißwalzen und/oder Kaltwalzen von Metallblöcken (sogenannten "Brammen") hergestellt werden und zum Lagern und Transportieren zu Rollen (sogenannten "Coils") aufgewickelt werden.

Die Metallbänder werden zerteilt und mittels geeigneter Techniken wie Stanzen, Bohren, Falzen, Profilieren und/oder Tiefziehen zu den gewünschten Formteilen ausgeformt. Größere Bauteile, wie beispielsweise Automobilkarosserien werden gegebenenfalls durch Verschweißen mehrerer Einzelteile zusammengefügt.

Die Korrosionsschutzbehandlung derartiger metallischer Materialien erfolgt üblicherweise in mehrstufigen Prozessen, und die Oberfläche behandelter Metalle weist mehrere verschiedene Schichten auf. Eine Korrosionsschutzbehandlung kann an verschiedenen Stellen des Herstellprozesses vorgenommen werden. Hierbei kann es sich sowohl um temporären Korrosionsschutz wie um permanenten Korrosionsschutz handeln. Ein temporärer Schutz wird beispielsweise nur zum Lagern oder Transportieren eines Metallbandes oder sonstigen metallischen Werkstückes aufgebracht und vor der endgültigen Verarbeitung wieder entfernt.

Technisch und wirtschaftlich von besonderer Bedeutung sind Bänder mit einer verzinkten Oberfläche, insbesondere Bänder aus galvanisch verzinktem oder feuerverzinktem Eisen bzw. Stahl. Der Korrosionsschutz des Zinks beruht darauf, dass es unedler ist als der metallische Werkstoff selbst und deshalb zunächst selbst korrodiert. Der metallische Werkstoff an sich bleibt unversehrt, solange er noch durchgehend mit Zink bedeckt ist. Weiterhin von Bedeutung sind Metallbänder aus Aluminium bzw. Aluminium-legierungen. In Gegenwart von Luftsauerstoff bildet sich auf der Oberfläche von Zn oder Zn-Legierungen, AI oder AI-Legierungen zunächst eine dünne Oxidschicht, die den korrosiven Angriff auf das darunter liegende Metall je nach den äußeren Bedingungen mehr oder weniger verlangsamt.

Um die schützende Wirkung einer solchen Oxidschicht zu verstärken, werden AI- und Zn-Oberflächen im Regelfalle einer zusätzlichen Passivierungsbehandlung unterzogen. Im Zuge einer derartigen- Behandlung löst sich ein Teil des zu schützenden Metalls auf, und wird zumindest teilweise in einen Film auf der Metalloberfläche eingebaut. Dieser Film ähnelt dem ohnehin vorhandenen Oxidfilm und enthält in der Regel gezielt eingebrachtes Phosphat, Schwermetalle und/oder Fluoride. Er bietet einen stärkeren Schutz gegen Korrosion als der dem Zink natürlicherweise anhaftende Film, der vorwiegend aus Zinkoxid und Zinkcarbonat besteht und wird üblicherweise als Passivierungsschicht bezeichnet. Er verbessert häufig auch die Haftung von auf dem Metall aufgebrachten Lackschichten. Anstelle des Begriffs "Passivierungsschicht" wird daher der Begriff "Konversionsschicht" häufig synonym verwendet, manchmal auch der Begriff "Vorbehandlungsschicht". Eine unmittelbar nach dem Verzinken auf Bandstahl aufgebrachte Passivierungsschicht wird gelegentlich auch als "Nachbehandlungsschicht" bezeichnet. Passivierungsschichten sind vergleichsweise dünn und weisen üblicherweise eine Dicke von nicht mehr als 3 µm auf.

Zur Verstärkung des Korrosionsschutzes werden auf die Passivierungsschicht im Regelfalle zusätzliche (Lack)schichten aufgebracht. Meist handelt es sich um eine Kombination mehrerer Lackschichten, die jeweils unterschiedlichen Zwecken dienen. Sie dienen beispielsweise dazu, die Passivierungsschicht und das Metall vor korrosiven Gasen und/oder Flüssigkeiten aber auch vor mechanischen Beschädigungen, wie beispielsweise Steinschlag zu schützen und natürlich auch ästhetischen Zwecken. Lackschichten sind üblicherweise deutlich dicker als Passivierungsschichten. Typische Dicken reichen von 4 µm bis 400 µm.

In der Vergangenheit wurden Passivierungsschichten auf Zink- oder Aluminiumoberflächen üblicherweise durch Behandlung des zu schützenden Werkstücks mit wässrigen, sauren Lösungen erhalten, die Chromate enthalten. In neuerer Zeit wurden auch Techniken entwickelt, bei denen man anstelle der Chromate verschiedene Polymere zur Passivierung einsetzt, darunter auch Polymere, die Phosphorsäure- und/oder Phosphonsäuregruppen aufweisen.

WO 00/55391 offenbart die Verwendung von Vinylphosphonsäure Homo- oder Copolymeren in Kombination mit SiO₂ zur Behandlung metallischer Oberflächen. Als Comonomere werden beispielsweise (Meth)acrylsäure, Maleinsäure oder Vinylsulfonsäure erwähnt, nicht jedoch (Meth)acrylsäureester.

WO 2004/74372 offenbart ein Verfahren zum Passivieren von Metalloberflächen unter Verwendung von Copolymeren aus 50 bis 99,9 Gew. % (Meth)acrylsäure, 0,1 bis 50 Gew. % anderen sauren Comonomeren mit COOH-Gruppen und/oder 0,1 bis 50 Gew. % von Phosphor- und oder Phosphonsäuregruppen aufweisenden Comonomeren sowie gegebenenfalls 0 bis 30 Gew. % an weiteren Monomeren.

EP-A 787 830 offenbart eine chromfreie Zusammensetzung zum Behandeln von metallischen Oberflächen, welche ein OH-Gruppen umfassendes Bindemittel, Phoshorsäure sowie bestimmte Metallionen umfasst. Einige Beispiele offenbaren Copolymere, die neben OH-Gruppen umfassenden Acrylaten, einfachen Acrylaten, Styrol sowie (Meth)-acrylsäure bis zu 1,7 Gew. % Methacrylsäure(phosphonooxyethyl)ester umfassen.

EP-A 1 146 144 offenbart eine Zusammensetzung zum Behandeln von metallischen Oberflächen, welche Al, Mg und Mn, ein wasserlösliches Bindemittel, eine Säure sowie Wasser umfasst. Ein Beispiel offenbart hierzu die Verwendung eines Monomers, welches 26,7 Gew. % Hydroxybutylacrylat, 0,8 Gew. % eines phospohorhaltigen Monomers sowie 72,5 Gew. % einfache Acrylate bzw. Styrol umfasst.

US 2005/181225 A1 offenbart die Verwendung von Blockcopolymeren zum Behandeln metallischer Oberflächen, wobei die Blockcopolymere mindestens einen Phosphorsäure und/oder Phosphonsäuregruppen umfassenden Block sowie mindestens einen davon verschiedenen Block aufweisen. Hierbei kann es sich beispielsweise um ein Blockcopolymer handeln, bei dem ein Block aus Vinylphosphonsäure und Acrylsäure mit einem Polyacrylamidblock oder einem Butylacrylatblock verknüpft ist.

Die Polymere, welche im Zuge einer Passivierungsbehandlung eingesetzt werden, müssen hohe Anforderungen erfüllen. Sie müssen die Oberfläche nicht nur wirksam vor Korrosion schützen, sondern müssen beispielsweise auch gute filmbildende sowie gute optische Eigenschaften aufweisen und sollen weiteren Lackschichten gute Haftung verleihen.

Die Optik von polymerhaltigen Passivierungsschichten kann insbesondere durch das so genannte "Auskreiden" beeinträchtigt werden. Hierbei sind die Schichten nicht mehr vollständig klar und transparent, sondern weisen mehr oder weniger intransparente, weiße Flecken auf. "Auskreiden" ist bei Anwendern äußerst unbeliebt, da es leicht mit Weißrostbildung verwechselt werden kann und daher die Qualitätskontrolle erschwert. Gewünscht sind daher klare und transparente Schichten.

Aufgabe der Erfindung war es, ein verbessertes Verfahren zur Passivierung metallischer Oberflächen bereitzustellen. Hierbei sollten insbesondere Passivierungsschichten mit guten optischen Eigenschaften erhalten werden, insbesondere einer geringen Neigung zum Auskreiden.

Dementsprechend wurde eine saure Zubereitung zum Passivieren von metallischen Oberflächen mit einem pH-Wert ≤ 5 wie in Anspruch 1 definiert gefunden. In einer bevorzugten Ausführungsform handelt es sich bei Monomer (B) um Vinylphosphonsäure.

Weiterhin wurde ein Verfahren zum Passivierung von metallischen Oberflächen, insbesondere der Oberfläche von Bandmetallen gefunden, bei dem man die besagte Formulierung einsetzt.

In einem dritten Aspekt betrifft die Erfindung das zur Ausführung des genannten Verfahrens eingesetzte Copolymer gemäß obiger Definition.

Zu der Erfindung ist im Einzelnen das Folgende auszuführen:
Bei den metallischen Oberflächen, die mittels des erfindungsgemäßen Verfahrens passiviert werden können, handelt es sich insbesondere um die Oberflächen unedler Metalle. Es kann sich beispielsweise um die Oberfläche von Eisen, Stahl, Zn, Zn-Legierungen, Al oder AI-Legierungen, Sn und Sn-Legierungen, Mg- oder Mg-Legierungen handeln. Bei den Stählen kann es sich sowohl um niedrig legierte wie um hochlegierte Stähle handeln.

Das erfindungsgemäße Verfahren eignet sich insbesondere zum Passivieren von metallischen Oberflächen aus Zn, Zn-Legierungen, Al oder AI-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder AI-Legierungen beschichteten Körpern handeln, wobei die Körper aus anderen Materialien, beispielsweise aus anderen Metallen, Legierungen, Polymeren oder Verbundwerkstoffen bestehen kann. Insbesondere kann es sich um die Oberfläche von verzinktem Eisen oder Stahl handeln. Der Begriff "verzinkt" umfasst selbstverständlich auch das Beschichten mit einer Zink-Legierung, insbesondere die Feuerverzinkung mit Zn-Al-Legierungen und die elektrolytische Verzinkung mit Zn-Ni, Zn-Fe, Zn-Mn- und Zn-Co-Legierungen.

Zn- oder AI-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Mg, Pb, Si, Mg, Sn, Cu oder Cd. Es kann sich auch um Al/Zn-Legierungen handeln, bei denen AI- und Zn in annähernd gleicher Menge vorhanden sind. Bei den Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische Bestandteile von Aluminium-Legierungen umfassen insbesondere Mg, Mn, Si, Zn, Cr, Zr, Cu oder Ti.

In einer bevorzugten Ausführungsform des Verfahrens handelt es sich um die Oberfläche eines Bandmetalls, bevorzugt aus Aluminium oder Aluminium-Legierungen oder Eisen bzw. Stahl, insbesondere Bänder aus elektrolytisch verzinktem oder heißverzinktem Stahl.

Weiterhin bevorzugt handelt es sich um die Oberflächen von Formkörpern, welche durch Verarbeitungsvorgänge wie Trennen, Umformen und/oder Fügen aus den genannten Bandmetallen erhältlich sind. Beispiele umfassen Automobilkarosserien oder Teile davon, LKW-Aufbauten, Verkleidungen für Haushaltgeräte wie beispielsweise Waschmaschinen, Geschirrspülmaschinen, Wäschetrockner, Gas- und Elektroherde, Mikrowellengeräte, Tiefkühltruhen oder Kühlschränke, Verkleidungen für technische Geräte oder Einrichtungen wie beispielsweise Maschinen, Schaltschränke, Computergehäuse oder dergleichen, Bauelemente im Architekturbereich wie Wandteile, Fassadenelemente, Deckenelemente, Fenster- oder Türprofile oder Trennwände, Möbel aus metallischen Materialien wie Metallschränke oder Metallregale.

Die zu behandelnden metallischen Oberflächen können selbstverständlich auch dünne oxidische, hydroxidische und/oder carbonatische Oberflächenschichten oder Schichten ähnlichen Aufbaues aufweisen. Derartige Schichten bilden sich auf metallischen Oberflächen im Kontakt mit der Atmosphäre üblicherweise von alleine, und sind im Begriff "metallische Oberfläche" mit eingeschlossen.

Die zum Passivieren eingesetzte Zubereitung umfasst eines oder mehrere wasserlösliche oder wasserdispergierbare, Phosphorsäure- und/oder Phosphonsäuregruppen aufweisende Copolymere.

Der Begriff "wasserlöslich" im Sinne dieser Erfindung soll bedeuten, dass das oder die eingesetzten Copolymere homogen wasserlöslich sein sollen. Der Begriff "wasserdispergierbar" bedeutet, dass die Lösung zwar nicht ganz klar ist, aber das Polymer homogen darin verteilt ist und sich auch nicht absetzt. Bevorzugt können zur Ausführung der Erfindung Copolymere eingesetzt werden, die wasserlöslich sind. Die Verwendung von wässrigen Dispersionen von vernetzten Polymerpartikeln an sich wasserunlöslicher Polymere gehört nicht zum Umfange dieser Erfindung.
Bevorzugt sollten die eingesetzten Copolymere lückenlos mit Wasser mischbar sein, auch wenn dies nicht in jedem Falle absolut notwendig ist. Sie müssen aber zumindest in einem solchen Maße wasserlöslich bzw. wasserdispergierbar sein, dass die Passivierung mittels des erfindungsgemäßen Verfahrens möglich ist. Im Regelfalle sollten die eingesetzten Copolymere eine Löslichkeit von mindestens 50 g/l, bevorzugt 100 g/l und besonders bevorzugt mindestens 200 g/l in Wasser aufweisen.

Dem Polymerfachmann ist bekannt, dass die Löslichkeit säuregruppenhaltiger Polymere in Wasser vom pH-Wert abhängig sein kann. Als Bezugspunkt soll daher jeweils der für den jeweiligen Einsatzzweck gewünschte pH-Wert gewählt werden. Ein Polymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen.

### Beschreibung der eingesetzten Copolymere

Die erfindungsgemäßen Copolymere sind aufgebaut aus jeweils mindestens einem Monomer der Gruppe (A), (B) und (C). Optional können noch Monomere (D) vorhanden sein. Darüber hinaus sind keine anderen Monomere vorhanden. Bevorzugt sind keine Monomere (D) vorhanden.

### Monomere (A)

Bei den Monomeren (A) handelt es sich um mindestens einen funktionalisierten Mono(meth)acryl-säureester der allgemeinen Formel H₂C=CHR¹-COOR². Hierbei steht R¹ für H oder Methyl. Bei R² handelt es sich um einen Rest ausgewählt aus der Gruppe von R^{2a}, R^{2b} oder R^{2c}.

Bei den Resten R^{2a} handelt es sich um Reste der allgemeinen Formel -(R³-O-)ₙ-R⁴. Hierbei steht n für eine natürliche Zahl von 2 bis 40. Bevorzugt steht n für 2 bis 20 und besonders bevorzugt für 2 bis 10. Die Reste R³ stehen jeweils unabhängig voneinander für einen zweiwertigen, geradkettigen oder verzweigten Alkylrest mit 2 bis 4 C-Atomen. Beispiele umfassen insbesondere 1,2-Ethylenreste, 1,2-Propylenreste, 1,2-Butylenreste sowie 1,4-Butylenreste. Selbstverständlich kann es sich auch um Gemische verschiedener Reste handeln. Bevorzugt handelt es sich um 1,2-Ethylen- und/oder 1,2-Propylenreste. Besonders bevorzugt handelt es sich ausschließlich um 1,2-Ethylenreste. Weiterhin bevorzugt sind Reste (R^{2a}), die sowohl 1,2-Ethylen- und 1,2-Propylenreste aufweisen, wobei die Menge der Ethylenreste mindestens 50 %, bevorzugt mindestens 70 % und besonders bevorzugt mindestens 80 % bezogen auf die Gesamtanzahl aller Reste R³ beträgt. R⁴ steht für H oder einen geradkettigen oder verzweigten Alkylrest mit 1 bis 6 C-Atomen. Bevorzugt als Reste R⁴ sind H, Methyl- und Ethylgruppen. Beispiele von Resten R^{2a} umfassen -CH₂-CH₂-O-CH₂-CH₂-O-CH₂-CH₃, -CH₂-CH(CH₃)-O-CH₂-CH(CH₃)OH, -CH₂-CH(CH₃)-O-CH(CH₃)-CH₂OH, -CH(CH₃) -CH₂- O-CH(CH₃)-CH₂OH oder -CH(CH₃)-CH₂-O-CH₂-CH(CH₃)OH.
Bei den Resten R^{2b} handelt es sich um Reste der allgemeinen Formel -R⁵-Xₘ. Hierbei steht m für eine natürliche Zahl von 1 bis 6, bevorzugt 1 bis 4, besonders bevorzugt 1 bis 3 und beispielsweise 1 oder 2. Der Rest R⁵ steht für einen (m+1)-wertigen, geradkettigen oder verzweigten Alkylrest mit 2 bis 10 C-Atomen, bevorzugt 2 bis 6 C-Atomen und besonders bevorzugt 2 bis 4 C-Atomen.
Der Alkylrest ist mit mindestens einer funktionellen Gruppe X substituiert, mit der Maßgabe, dass nicht mehr als eine funktionelle Gruppe X pro C-Atom in R⁵ vorhanden ist. Bei X handelt es sich um mindestens eine funktionelle Gruppe ausgewählt aus der Gruppe von -OH, -OR⁶, -NH₂, -NHR⁶, -NR⁶₂, -N⁺HR⁶₂Y⁻ oder -N⁺R⁶₃Y⁻. Hierbei steht R⁶ für Methyl oder Ethyl und Y für ein einwertiges Anion. Beispiele geeigneter Anionen umfassen beispielsweise HSO₄⁻, HSO₃⁻ sowie insbesondere die Anionen organischer Sulfonsäuren wie beispielsweise CH₃SO₃⁻, CF₃SO₃⁻ oder p-CH₃(C₆H₄)SO₃⁻ oder organischer Sulfate, wie beispielsweise CH₃SO₄⁻ oder CH₃CH₂SO₄⁻. Halogenid-Ionen sind weniger bevorzugt, wenngleich sie in Spezialfällen auch eingesetzt werden können. Beispiele für Reste R^{2b} mit Amino- bzw. Ammoniumgruppen umfassen -CH₂-CH₂-N(CH₃)₂ und -CH₂-CH₂-N⁺(CH₃)_{3*}CH₃SO₄⁻.

Bevorzugt handelt es sich bei der funktionellen Gruppe X um eine OH-Gruppe. Beispiele geeigneter Reste R^{2b} mit OH-Gruppen umfassen lineare Reste der allgemeinen Formel -(CH₂)ₘ-OH wie -CH₂-CH₂-OH, -CH₂-CH₂-CH₂-OH, -CH₂-CH₂-CH₂-CH₂-OH oder -CH₂-CH₂-CH₂-CH₂-CH₂-CH₂-OH.

Besonders bevorzugte Reste R^{2b} zur Ausführung der Erfindung sind Reste ausgewählt aus der Gruppe von -CH₂-CH₂-OH, -CH₂-CH₂-CH₂-OH, -CH₂-CH₂-CH₂-CH₂-OH, -CH₂-CH(CH₃)- OH, -CH(CH₃)-CH₂-OH ader -CH₂-CH(OH)-CH₂-OH.

In einer weiteren, bevorzugten Ausführungsform der Erfindung handelt es sich bei mindestens einem der Reste R^{2b} um einen verzweigten Alkylrest der allgemeinen Formel - R⁷-CH(R⁸)OH. Hierbei stehen R⁷ und R⁸ jeweils für einen linearen oder verzweigten Alkylrest mit 1 bis 8 C-Atomen, bevorzugt 1 bis 6 C-Atomen und besonders bevorzugt 1 bis 4 C-Atomen, mit der Maßgabe, dass die Summe der C-Atome in R⁷ und R⁸ nicht mehr als 9 beträgt. Bevorzugt handelt es sich bei R⁷ und R⁸ jeweils um lineare Alkylgruppen. Besonders bevorzugt handelt es sich bei R⁸ um eine Methylgruppe. Beispielsweise kann es sich um -CH₂-CH(CH₃)-OH handeln. Bei derartigen verzweigten (Meth)acrylsäureestern ist die Tendenz der OH-Gruppe zur Bildung weiterer Esterbindungen mit anderen COOH-haltigen Monomeren deutlich herabgesetzt. Ganz besonders bevorzugt sind -CH₂-CH(CH₃)-OH und/oder -CH(CH₃)-CH₂-OH, insbesondere ein Gemisch aus beiden Resten. (Meth)acrylsäureester mit derartigen Resten können auf einfache Art und Weise, z. B. durch Veresterung von (Meth)acrylsäure mit 1,2-Propy-lenglykol erhalten werden.

Bei den Resten R^{2c} handelt es sich um Mono- oder Oligosaccharidreste, bevorzugt um Monosaccharidreste. Es kann sich prinzipiell um alle Arten von Sacchariden handeln. Bevorzugt können von Pentosen und Hexosen, insbesondere von Hexosen abgeleitete Reste eingesetzt werden. Beispiele geeigneter Monosaccharide umfassen Glucose, Mannose, Galaktose, Fruktose oder Ribose. Bevorzugt können von Glukose abgeleitete Rest eingesetzt werden. Es kann sich auch um Derivate der Saccharide handeln, beispielsweise um durch Reduktion oder Oxidation aus den Sacchariden hervorgehende Produkte. Insbesondere kann es sich um Zuckersäuren wie beispielsweise Gluconsäure handeln.

Selbstverständlich können auch Gemische mehrerer verschiedener Monomere (A) eingesetzt werden. Die Menge aller der eingesetzten Monomere (A) zusammen beträgt 15 bis 80 Gew. % bezogen auf die Menge aller in das Polymer einpolymerisierten Monomere. Bevorzugt beträgt die Menge 25 bis 75 Gew. %, ganz besonders bevorzugt 35 bis 72 Gew. % und beispielsweise 45 bis 70 Gew. %.

### Monomere B

Bei den Monomeren (B) handelt es sich um monoethylenisch ungesättigte Monomere, welche Phosphorsäure- und/oder Phosphonsäuregruppen aufweisen. Es kann sich auch um Salze und/oder Ester davon handeln. Im Falle von Estern handelt es sich bevorzugt um Halbester, d.h. es sind nicht alle der sauren OH-Gruppen der Phosphorsäure- und/oder Phosphonsäuregruppen verestert. Besonders bevorzugt handelt es sich bei den Monomeren (B) um die freien Säuren bzw. deren Salze.

Beispiele für Monomere (B) umfassen Vinylphosphonsäure, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Acrylsäure(phosphonoxyethyl)ester, Methacrylsäure(phosphonoxyethyl)ester, Phosphorsäure mono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxypropyl)ester, Phosphorsäure mono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol. Bevorzugt handelt es sich um Vinylphosphonsäure, Phosphorsäuremonovinylester oder Allylphosphonsäure, besonders bevorzugt ist Vinylphosphonsäure. Selbstverständlich können auch Gemische mehrerer verschiedener Monomere (B) eingesetzt werden. Die Menge aller der eingesetzten Monomere (B) zusammen beträgt 10 bis 75 Gew. % bezogen auf die Menge aller in das Polymer einpolymerisierten Monomere. Bevorzugt beträgt die Menge 15 bis 60 Gew. % und ganz besonders bevorzugt 20 bis 45 Gew. %.

### Monomere (C)

Bei den Monomeren (C) handelt es sich um monoethylenisch ungesättigte Monomere, welche mindestens eine COOH-Gruppe umfassen. Es kann sich auch um Salze davon handeln.

Beispiele für Monomere (C) umfassen (Meth)acrylsäure, Crotonsäure, Vinylessigsäure, Maleinsäure, Fumarsäure, Methylfumarsäure, Methylmaleinsäure, Dimethylmaleinsäure, Methylenmalonsäure oder Itaconsäure oder auch um C₁- bis C₄-Halbester der besagten Dicarbonsäuren. Dicarbonsäuren können auch in Form ihrer cyclischen Anhydride eingesetzt werden, sofern die Bildung cyclischer Anhydride möglich ist. Selbstverständlich können auch Gemische mehrerer verschiedener Monomere (C) eingesetzt werden.

In einer bevorzugten Ausführungsform der Erfindung handelt es sich bei mindestens einem der Monomere (C) um (Meth)acrylsäure, besonders bevorzugt ausschließlich um (Meth)acrylsäure.

Die Menge aller der eingesetzten Monomere (C) zusammen beträgt 5 bis 70 Gew. % bezogen auf die Menge aller in das Polymer einpolymerisierten Monomere. Bevorzugt beträgt die Menge 10 bis 55 Gew. % und ganz besonders bevorzugt 10 bis 35 Gew. %.

### Monomere (D)

Neben den Monomeren (A), (B) und (C) können optional auch noch von weitere -von (A) bis (C) verschiedene- ethylenisch ungesättigten Monomere (D) eingesetzt werden. Die Monomere (D) dienen zur Feinsteuerung der Eigenschaften des Copolymers. Selbstverständlich können auch mehrere verschiedene Monomere (D) eingesetzt werden. Sie werden vom Fachmann je nach den gewünschten Eigenschaften des Copolymers ausgewählt, mit der Maßgabe, dass sie mit den Monomeren (A), (B) und (C) copolymerisierbar sein müssen.

Beispiele geeigneter Monomere (D) umfassen insbesondere Alkylester der (Meth)-acrylsäure, wie Methyl(meth)acrylat, Ethyl(meth)acrylat, Butyl(meth)acrylat, 2-Ethylhexyl (meth)acrylat. Weiterhin geeignet sind Vinyl- oder Allylether wie z.B. Methylvinylether, Ethylvinylether, Propylvinylether, 2-Ethylhexylvinylether, Vinylcyclohexylether, Vinyl-4-hydroxybutylether, Decylvinylether, 2-(Diethylamino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat. Es können auch basische Comonomere beipielsweise Acrylamid und alkylsubstituierte Acrylamide eingesetzt werden.

Bei den Monomeren (D) kann es sich auch um vernetzend wirkende Monomere mit mehreren ethylenisch ungesättigten Gruppen handeln. Beispiele umfassen Di(meth)-acrylate wie Ethylenglykoldi(meth)acrylat, Butandiol-1,4-di(meth)acrylat, Hexandiol-1,6-di(meth)acrylat, Methylenbisacrylamid oder Di(meth)acrylate des Polyethylenglycols, Tri(meth)acrylate wie Trimethylolpropantri(meth)acrylat sowie Oligo(meth)acrylate.

Die Menge aller optional eingesetzten Monomere (D) zusammen beträgt 0 bis 20 Gew. % bezogen auf die Gesamtmenge eingesetzten Monomere. Bevorzugt beträgt die Menge 0 bis 10 %. Falls vernetzende wirkende Monomere (D) anwesend sind, sollte deren Menge im Regelfalle 5 Gew. %, bevorzugt 2 Gew. % bezogen auf die Gesamtmenge aller für das Verfahren eingesetzten Monomere nicht überschreiten. Sie kann beispielsweise 10 ppm bis 1 Gew. % betragen. Ganz besonders bevorzugt sind keine Monomere (D) vorhanden.

### Herstellung der Polymere

Die Herstellung der erfindungsgemäßen Polymere kann einerseits direkt aus den Monomeren (A), (B), (C) sowie optional (D) erfolgen. In weiteren Ausführungsformen der Erfindung kann die Herstellung der Polymere auch durch polymeranaloge Veresterung erfolgen oder aber indem man Monomere während der Polymerisationsreaktion verestert oder hydrolysiert.

### Variante A: Direkte Herstellung aus den Monomeren

Die Komponenten (A), (B), (C) und optional (D) können in prinzipiell bekannter Art und Weise miteinander polymerisiert werden. Entsprechende Polymerisationstechniken sind dem Fachmann bekannt. Bevorzugt werden die Copolymere durch radikalische Polymerisation in einem geeigneten Lösungsmittel hergestellt. Einzelheiten zum Durchführen einer radikalischen Polymerisation sind dem Fachmann bekannt.

Bevorzugt wird die Polymerisation in wässriger oder überwiegend wässriger Lösung vorgenommen. Als weitere Lösungsmittel neben Wasser kommen mit Wasser mischbare organische Lösemittel in Frage, vor allem mit Wasser mischbare Alkohole. Bevorzugt wird die Polymerisation in Wasser vorgenomen.

Die radikalische Polymerisation wird bevorzugt durch die Verwendung geeigneter thermisch aktivierbarer Polymerisationsinitiatoren gestartet. Als Initiatoren können prinzipiell alle unter den Polymerisationsbedingungen in Radikale zerfallende Verbindungen eingesetzt werden, sofern sie in ausreichendem Maße im Reaktionsmedium löslich sind. Beispiele geeigneter Initiatoren umfassen anorganische Peroxoverbindungen, wie Peroxodisulfate, insbesondere Ammonium-, Kalium- und vorzugsweise Natriumperoxodisulfat, Peroxosulfate, Hydroperoxide, Percarbonate und Wasserstoffperoxid und die sogenannten Redoxinitiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Weiterhin können wasserlösliche Azoverbindungen wie beispielsweise Azobis(2-amidinopropan)dihydrochlorid eingesetzt werden.

Sofern als Lösemittel Gemische mit Alkoholen verwendet werden, können auch in organischen Lösemitteln lösliche Peroxoverbindungen eingesetzt werden, wie bespielsweise t-Butylperoctoat.

Weiterhin bevorzugte Initiatoren sind Redoxinitiatoren. Redoxinitiatoren enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit, -sulfid oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 mol % der reduzierenden Komponente des Redoxkatalysators.

In Kombination mit den Initiatoren bzw. Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salze sind z.B. Eisen(II)sulfat, Kobalt(II)-chlorid, Nickel(II)sulfat, Kupfer(I)chlorid. Das reduzierend wirkende Übergangsmetallsalz wird üblicherweise in einer Menge von 0,1 bis 1 000 ppm, bezogen auf die Summe der Monomeren, eingesetzt. Besonders vorteilhaft sind beispielsweise Kombinationen aus Wasserstoffperoxid und Eisen(II)salzen, wie eine Kombination von 0,5 bis 30 Gew.-% Wasserstoffperoxid und 0,1 bis 500 ppm FeSO₄ x 7 H₂O, jeweils bezogen auf die Summe der Monomeren.

Selbstverständlich können auch Gemische verschiedener Initiatoren eingesetzt werden, vorausgesetzt sie beeinflussen sich nicht negativ. Die Menge wird vom Fachmann je nach dem gewünschten Copolymer festgelegt. Im Regelfalle werden 0,05 Gew. % bis 30 Gew. %, bevorzugt 0,1 bis 15 Gew. % und besonders bevorzugt 0,2 bis 8 Gew. % des Initiators bezüglich der Gesamtmenge aller Monomere eingesetzt.

Außerdem können in prinzipiell bekannter Art und Weise auch geeignete Regler, wie beispielsweise Mercaptoethanol eingesetzt werden. Bevorzugt werden keine Regler eingesetzt.

Vorzugsweise werden thermische Initiatoren eingesetzt, wobei wasserlösliche Azoverbindungen und wasserlösliche Peroxoverbindungen bevorzugt sind. Ganz besonders bevorzugt sind Azobis(2-amidinopropan)dihydrochlorid, Wasserstoffperoxid und Natriumperoxodisulfat oder Mischungen hieraus ggf. in Verbindung mit 0,1 bis 500 ppm FeSO₄ x 7 H₂O.

Die Polymerisation kann alternativ aber beispielsweise auch durch geeignete Strahlung ausgelöst werden. Beispiele für geeignete Photoinitiatoren umfassen Acetophenon, Benzoinether, Benzildialkyldiketale und deren Derivate.

Die radikalische Polymerisation wird bevorzugt bei einer Temperatur von weniger als 130°C vorgenommen. Abgesehen davon kann die Temperatur vom Fachmann innerhalb weiter Grenzen je nach der Art der eingesetzten Monomere, des Initiators und dem gewünschten Copolymer variiert werden. Bewährt hat sich hierbei eine Mindesttemperatur von etwa 60°C. Die Temperatur kann während der Polymerisation konstant gehalten werden oder es können auch Temperaturprofile gefahren werden. Bevorzugt beträgt die Polymerisationstemperatur 70 bis 125°C, besonders bevorzugt 75 bis 100°C.

Die Polymerisation kann in üblichen Apparaturen zur radikalischen Polymerisation vorgenommen werden. Sofern man oberhalb der Siedetemperatur des Wassers bzw. des Gemisches aus Wasser und weiteren Lösemitteln arbeitet, wird in einem geeigneten Druckgefäß gearbeitet, ansonsten kann drucklos gearbeitet werden. Die Polymerisationszeiten betragen üblicherweise 1-10 h, bevorzugt 2-9 h und insbesondere 3-8 h.

Bei der Polymerisation in wässrigem Medium ist zu beachten, dass die als Monomere (A) eingesetzten (Meth)acrylsäureester in wässriger Lösung nicht absolut hydrolysestabil sind, sondern zu (Meth)acrylsäure und dem entsprechenden Alkohol hydrolysieren können. Umgekehrt können Monomere, welche COOH-Gruppen aufweisen mit Alkoholen im Reaktionsmedium auch in-situ Ester bilden. Hierdurch ergeben sich weitere Synthesevarianten für das Polymer.

Erfindungsgemäße Copolymere, die (Meth)acrylsäureeinheiten als Einheiten (C) enthalten können also auch erhalten werden, indem man nur Monomere (A), (B) sowie ggf. (D) in wässrigem Medium zur Polymerisation einsetzt, wobei die Einheiten (C) durch Hydrolyse im Zuge der Polymerisation in-situ gebildet werden. Selbstverständlich können aber auch zusätzliche (Meth)acrylsäure und/oder andere Monomere (C) von Anfang an zugegeben werden. Dies kann empfehlenswert sein, falls größere Mengen der Monomereinheiten (C) in das Copolymer eingebaut werden sollen.

Wie dem Fachmann bekannt, ist die saure Esterhydrolyse eine ausgesprochene Gleichgewichtsreaktion. Der Hydrolysegrad kann durch die Bedingungen, unter denen die Polymerisation vorgenommen wird, gesteuert werden. Je höher die Temperatur, je länger die Reaktionszeit und je geringer die Konzentration der Monomere bzw. Copolymere (d.h. je höher der Wasseranteil), desto höher der Hydrolysegrad. Methacrylate hydrolysieren im Allgemeinen langsamer als Acrylate. Weiterhin lässt sich die Hydrolyse durch teilweise Neutralisation der sauren Gruppen eingesetzter Monomere, also zumindest der sauren Gruppen der Monomere (B) sowie der eventuell zusätzlich eingesetzter Monomere (C) verlangsamen. Es ist aber nicht erforderlich, dass ein Gleichgewichtszustand erreicht wird, sondern während der Polymerisation kann je nach den Bedingungen auch kein Gleichgewichtszustand erreicht werden.

Als Basen zum Neutralisieren kommen insbesondere Ammoniak, Amine, Aminoalkohole oder Alkalimetallhydroxide oder lösliche basische Zink, Magnesium, Aluminium oder Calciumsalze, bevorzugt die Hydroxide in Betracht. Selbstverständlich können auch Gemische verschiedener Basen eingesetzt werden. Bevorzugte Amine sind Alkylamine mit bis zu 24 C-Atomen sowie Aminoalkohole, die bis zu 24 C-Atome sowie Struktureinheiten des Typs -N-C₂H₄-O- und -N-C₂H₄-OH und -N-C₂H₄-O-CH₃ aufweisen. Beispiele derartiger Aminoalkohole umfassen Ethanolamin, Diethanolamin, Triethanolamin und ihre methylierten Derivate. Die Basen können vor oder während der Polymerisation zugegeben werden.

Der Neutralisationsgrad sollte aber keineswegs zu hoch sein, sondern es sollten noch ausreichend freie Säuregruppen im Polymer vorhanden sein. Durch freie Säuregruppen wird eine besonders gute Haftung der Polymere auf der metallischen Oberfläche erreicht. Im Regelfalle sollten nicht mehr als 50 mol % der im Copolymer vorhandenen Säuregruppen neutralisiert werden, bevorzugt 5 bis 40 mol %, besonders bevorzugt 15 bis 10 mol %.

Die synthetisierten Copolymere können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Bevorzugt werden die Copolymere nach der Polymerisation aber überhaupt nicht aus der wässrigen Lösung isoliert, sondern die erhaltenen Lösungen der Copolymere werden als solche für das erfindungsgemäße Verfahren eingesetzt.

### Variante B: Polymeranaloge Veresterung

In einem alternativen Verfahren zur Herstellung der erfindungsgemäßen Copolymere können die Copolymere durch polymeranaloge Veresterung hergestellt werden.

Hierzu stellt man als Ausgangsmaterial ein Polymer aus (Meth)acrylsäureeinheiten, den Monomeren (B), gegebenenfalls von (Meth)acrylsäure verschiedenen Monomeren (C) sowie optional Monomeren (D) her. Dies kann mittels der oben geschilderten Techniken zur radikalischen Polymerisation vorgenommen werden. Es können hierzu ggf. auch kommerziell erhältliche Polymere eingesetzt werden. Beispielsweise sind Acrylsäure-Vinylphosphonsäure-Copolymere (70:30) kommerziell erhältlich.

Die COOH-Gruppen der (Meth)acrylsäureeinheiten können in einem separaten Schritt nach der Polymerisation mit geeigneten Alkoholen verestert werden. Als Alkohol zum Verestern setzt man Alkohole der allgemeinen Formel HO-R² ein, wobei R² wie oben definiert ist. Hierbei werden jeweils in-situ einpolymerisierte Baueinheiten (A) erhalten. Sofern das Copolymer noch andere Monomere enthält, welche COOH-Gruppen aufweisen, werden diese selbstverständlich auch entsprechend verestert. Beispielhaft sei Maleinsäure genannt.

Je nach Art des Alkohols HO-R² kann man den Alkohol selbst als einziges Lösungsmittel einsetzen. Selbstverständlich können auch mehrere verschiedene Alkohole HO-R² im Gemisch eingesetzt werden. Der Alkohol kann aber auch im Gemisch mit anderen Lösungsmitteln, z.B. mit Wasser oder anderen polaren aprotischen Lösungsmitteln, wie Ketonen, z.B. Aceton oder Methylethylketon, Ethern, wie Dioxan oder Tetrahydrofuran eingesetzt werden. Sofern Wasser im Gemisch mit Alkoholen eingesetzt wird, sollte die Menge aber möglichst gering sein. In der Regel sollte die Menge an Wasser nicht mehr als 60 Gew. % bzgl. der Menge aller Lösungsmittel betragen, bevorzugt nicht mehr als 50 Gew. % und besonders bevorzugt nicht mehr als 45 Gew. % betragen.

Bevorzugt können Alkohole der allgemeinen Formel HO-R⁷-CH(R⁸)OH eingesetzt werden, wobei R⁷ und R⁸ wie oben definiert sind. Bevorzugt handelt es sich hierbei bei R⁷ und R⁸ um lineare Alkylreste, besonders bevorzugt steht R⁸ für -CH₃.

Ein ganz besonders bevorzugt eingesetzter Alkohol ist 1,2-Propylenglykol HO-CH₂-CH(OH)-CH₃. Hierbei reagiert im Zuge der Veresterung bevorzugt die primäre OH-Gruppe, während die Reaktivität der sekundären deutlich geringer ist. Auf diese Art und Weise wird elegant vermieden, dass das Polymer vernetzt und ein unlösliches Gel bildet. Desweiteren fungiert 1,2-Propylenglykol gleichzeitig als Lösungsmittel und dient insbesondere als Lösungsvermittler für andere Alkohole, insbesondere für feste und schlecht schmelzbare Alkohole.

Es kann aber durchaus erwünscht sein, eine leichte Vernetzung des Polymers zu erwirken. Hierfür hat es sich bewährt, Anteile von Alkoholen zu verwenden, die zu Monomeren des Typs A mit CH₂-OH-Seitenketten führen. Beispielhaft sei hier auf Mischungen aus 1,2-Ethylenglykol und 1,2-Propylenglykol hingewiesen. Das Mischungsverhältnis wird so gewählt, dass eine ausreichende Löslichkeit der Polymerlösung und eine ausreichende Stabilität der Lösung erhalten wird. Es kann beispielsweise 30 mol % 1,2-Ethylenglykol und 70 mol % 1,2-Propylenglykol betragen.

Bevorzugte Reaktionstemperaturen zur Veresterung liegen bei 70°C bis 120°C, besonders bevorzugt bei 80°C bis 100°C. Je nach den Reaktionstemperaturen wird drucklos oder auch unter Druck gearbeitet.

Als Hilfsmittel können auch typische Veresterungskatalysatoren eingesetzt werden. Beispiele umfassen Mineralsäuren, Ionenaustauscher, Lewissäuren, Metallsalze, wie Zinkacetat, heterogene Katalysatoren, wie Metallionen-modifizierte Kieselgele, amphotere Metallhydroxide oder Titanverbindungen des Typs Ti(O-Alkyl)₄.

Der Veresterungsgrad kann in prinzipiell bekannter Art und Weise durch die Reaktionsbedingungen gesteuert werden. Es ist dem Fachmann bekannt, dass die saure Esterbildung bzw. -hydrolyse eine ausgesprochene Gleichgewichtsreaktion ist. Der Veresterungsgrad hängt einerseits von der Lage des chemischen Gleichgewichtes ab sowie davon, ob es während der Reaktionszeit überhaupt erreicht wird. Das Gleichgewicht hängt u.a. vom Verhältnis von Alkohol zu COOH-Gruppen, dem Wasseranteil in der Reaktionsmischung sowie ggf. der Temperatur ab. Reaktionstemperatur, Reaktionszeit sowie ggf. die Anwesenheit eines Katalysators bestimmen darüber, ob das Gleichgewicht überhaupt erreicht wird.

Der Veresterungsgrad beträgt bei der vorliegenden polymeranalogen Veresterung in der Regel etwa 5 bis 60 mol % bzgl. der Summe der ursprünglich vorliegenden COOH-Gruppen, sofern das gebildete Reaktionswasser nicht aus der Reaktionsmischung entfernt wird. Bevorzugt beträgt er bevorzugt mindestens 15 mol % und besonders bevorzugt mindestens 20 mol %. Sofern ein höherer Veresterungsgrad gewünscht ist, sollte das gebildete Wasser aus der Reaktionsmischung entfernt werden.

Die erhaltenen Copolymere können aus der Reaktionslösung wie oben beschrieben isoliert werden. Bevorzugt werden die Copolymere nach der Polymerisation aber überhaupt nicht aus der Lösung isoliert, sondern die erhaltenen Lösungen der Copolymere werden als solche für das erfindungsgemäße Verfahren eingesetzt. Nicht umgesetzte Alkohole stören im Regelfalle nicht, sie können sogar durch einen weichmachenden Effekt positiv wirken.

### Variante C: Veresterung im Zuge der Polymerisation

In einer weiteren Variante des Herstellverfahrens kann man als Ausgangsmaterialien zur Herstellung der Copolymere (Meth)acrylsäure, Monomere (B) sowie optional Monomere (C) und/oder (D) einsetzen.

Als Lösemittel für die Polymerisation setzt man bei dieser Variante die oben genannten Alkohole HO-R² und bevorzugt die ebenfalls genannten Alkohole HO-R⁷-CH(R⁸)OH bzw. Gemische dieser Alkohole mit Wasser ein. Die Monomere können unter Verwendung der eingangs genannten Initiatoren miteinander polymerisiert werden, wobei sich im Zuge der Polymerisation in-situ die Monomereinheiten (A) bilden. Hinsichtlich der Einzelheiten wird auf das unter Synthesevariante B Gesagte verwiesen.

### Verfahren zum Passivieren

Zur Durchführung des erfindungsgemäßen Verfahrens zum Passivieren wird eine saure, wässrige Zubereitung der besagten erfindungsgemäßen Copolymere eingesetzt. Hierbei kann es sich selbstverständlich auch um eine Mischung mehrerer, verschiedener Copolymere der besagten Art handeln.

Das Molekulargewicht M_{w} (Gewichtsmittel) der für das erfindungsgemäße Verfahren eingesetzten Copolymere wird vom Fachmann je nach der gewünschten Anwendung festgelegt. Eingesetzt werden können beispielsweise Polymere mit einem Molekulargewicht M_{w} von 3000 bis 1 000 000 g/mol. Bewährt haben sich insbesondere Polymere mit 5000 g/mol bis 500 000 g/mol, bevorzugt 10 000 g/mol bis 250 000 g/mol, besonders bevorzugt 15 000 bis 100 000 g/mol und ganz besonders bevorzugt 20 000 bis 75 000 g/mol.

Als Lösemittel umfasst die Zubereitung bevorzugt Wasser. Sie kann daneben noch mit Wasser mischbare organische Lösemittel umfassen. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol und N-Methylpyrrolidon. Weiterhin können insbesondere Alkohole der allgemeinen Formel HO-R² anwesend sein. Diese können sich beispielsweise durch Hydrolyse von (Meth)acrylsäureestern (A) bilden oder aber es kann sich um -im Zuge der polymeranalogen Veresterung- nicht umgesetzte Reste handeln. Im Regelfalle beträgt die Menge des Wassers aber mindestens 65 Gew. %, bevorzugt mindestens 75 Gew. % und ganz besonders bevorzugt mindestens 85 Gew. %. Die Angaben beziehen sich jeweils auf die Gesamtmenge aller Lösemittel.

Vorteilhaft können unmittelbar die polymerhaltigen Lösungen eingesetzt werden, die aus der Polymerisation und/oder der polymeranalogen Veresterung resultieren, welche vor dem Einsatz gegebenenfalls noch weiter verdünnt werden können.

Die Konzentration der erfindungsgemäß verwendeten Copolymere in der Zubereitung beträgt 0,1 bis 50 Gew. % bezogen auf die Menge aller Komponenten der Formulierung. Bevorzugt beträgt die Menge 1 bis 40 Gew. % und besonders bevorzugt 5 bis 35 Gew. %. Durch die Konzentration und die Art der eingesetzten Polymere können die Eigenschaften der Zubereitung, beispielsweise deren Viskosität oder deren pH-Wert beeinflusst werden. Die Eigenschaften der Zubereitung können somit optimal auf eine bestimmte Verfahrenstechnik zur Behandlung angepasst werden. So hat sich beispielsweise bei einer Technik mit Abquetschen eine Konzentration von 10 bis 25 Gew. % bewährt, beim Auftrag mittels Lackwalzen eine Konzentration von 15 bis 25 Gew. %. Die angegebenen Konzentrationen beziehen sich auf die einsatzfertige Zubereitung. Es kann auch zunächst ein Konzentrat hergestellt werden, welches erst vor Ort mit Wasser oder optional anderen Lösemittelgemischen auf die gewünschte Konzentration verdünnt wird.

Die erfindungsgemäß eingesetzte saure Zubereitung weist einen pH-Wert von nicht mehr als 5 auf, insbesondere einen pH-Wert von 0,5 bis 5, bevorzugt 0,75 bis 3,5 und besonders bevorzugt 0,8 bis 2,0. Der pH-Wert der Zubereitung kann beispielsweise durch die Art und Konzentration der erfindungsgemäß verwendeten Polymere gesteuert werden. Naturgemäß spielt hierbei der Neutralisationsgrad des Polymers eine maßgebliche Rolle.

Die erfindungsgemäß eingesetzte Zubereitung kann optional weiterhin mindestens eine anorganische oder organische Säure oder Mischungen davon umfassen. Die Auswahl derartiger Säuren ist nicht begrenzt, vorausgesetzt, es treten keine negative Effekte zusammen mit den anderen Komponenten der Formulierung auf. Der Fachmann trifft eine entsprechende Auswahl.

Beispiele geeigneter Säuren umfassen Phosphorsäure, Phosphonsäure oder organische Phosphonsäuren wie 1-Hydroxyethan-1,1-diphosphonsäure (HEDP), 2-Phosphonobutan-1,2,4-tricarbonsäure (PBTC), Aminotri(methylenphosphonsäure) (ATMP), Ethylendiamintetra(methylenphosphonsäure) (EDTMP) oder Diethylentriaminpenta-(methylenphosphonsäure) (DTPMP), N-2-(Hydroxyethyl)iminobis(methylphosphonsäure) (HEIBPS), Sulfonsäuren wie Methansulfonsäure, Amidosulfonsäure, p-Toluolsulfonsäure, m-Nitrobenzolsulfonsäure und Derivate davon, Salpetersäure, Ameisensäure oder Essigsäure. Bevorzugt sind phosphorhaltige Säuren wie H₃PO₄, Phophonsäure die genannten organischen Phosphonsäuren, HNO₃ und/oder Methansulfonsäure und besonders bevorzugt ist H₃PO₄. Ganz besonders bevorzugt enthält die Formulierung ausschließlich H₃PO₄ als Säure.

In saurer, wässriger Lösung können die (Meth)acrylsäureestereinheiten (A) des erfindungsgemäß eingesetzten Copolymers je nach Art der Estergruppe auch bei Raumtemperatur u.U. langsam hydrolysieren. Gleichzeitig können OH-Gruppen der Reste R² auch noch u.U. auch noch mit freien COOH-Gruppen unter Bildung von Vernetzungsstellen reagieren. Dies kann zu unerwünschter Vergelung der Zubereitung führen. Es kann daher empfehlenswert sein, die Polymere nach der Reaktion mit geeigneten Basen, beispielsweise mit Triethanolamin teilweise zu neutralisieren und die gewünschte Säure erst unmittelbar vor der Anwendung zuzugeben. Die pH-Werte solcher Formulierungen können deutlich höher liegen und betragen beispielsweise 3 bis 6.

Diese unerwünschte Vernetzungsreaktion kann auch durch den Einsatz von Monomeren mit sterisch gehinderten Resten -R⁷-CH(R⁸)OH weitgehend vermieden werden.

Die Zubereitung kann über die genannten Komponenten hinaus optional noch weitere Komponenten umfassen.

Die Zubereitung kann optional mindestens ein gelöstes Metallion oder eine gelöste Metallverbindung umfassen. Hierbei kann es sich beispielsweise um eine Metallverbindung des Al, Mg, Ca, Ni, Co, V, Fe, Zn, Zr, Mn, Mo, W, Ti, Zr handeln. Die Verbindungen können beispielsweise in Form der jeweiligen Aqua-Komplexe eingesetzt werden. Es kann sich aber auch um Komplexe mit anderen Liganden handeln, wie beispielsweise Fluorid-Komplexe von Ti(IV), Zr(IV) oder Oxometallate wie beispielsweise MoO₄²⁻ oder WO₄²⁻, oder die Verbindungen können auch in Form von Komplexe mit typischen chelatbildenden Liganden wie Ethylendiamintetraessigsäure (EDTA), Diethylentriaminpentaessigsäure (DTPA), Hydroxyethylethylendiamintriessigsäure (HEDTA), Nitrilotriessigsäure (NTA) oder Methylglycindiessigsäure (MGDA) eingesetzt werden. Weiterhin können selbstverständlich Komplexbindungen zu den Carboxylgruppen oder anderen sauren Gruppen des eingesetzten Copolymers vorliegen. Bevorzugt handelt es sich um Zubereitungen, welche keine Chromverbindungen enthalten. Weiterhin sollten bevorzugt keine Metallfluoride bzw. komplexen Metallfluoride anwesend sein. Die erfindungsgemäße Passivierung ist also bevorzugt eine chromfreie Passivierung, besonders bevorzugt eine chrom- und fluoridfreie Passivierung.

In einer bevorzugten Ausführungsform der Erfindung umfasst die Zubereitung mindestens ein lösliches Metallion, ausgewählt aus der Gruppe von Zn²⁺, Mg²⁺, Ca²⁺ oder Al³⁺. Die Ionen können als hydratisierte Metallionen vorliegen, sie können aber in Form von gelösten Verbindungen vorliegen, beispielsweise als Komplexverbindungen mit den oben erwähnten Komplexbildnern. Insbesondere können die Ionen Komplexbindungen zu den sauren Gruppen des Polymers aufweisen. Bevorzugt handelt es sich um Zn²⁺ oder Mg²⁺ und ganz besonders bevorzugt um Mg²⁺. Bevorzugt umfasst die Zubereitung daneben keine weiteren Metallionen.

Die Menge der Metallionen aus der Gruppe von Zn²⁺, Mg²⁺, Ca²⁺ oder Al³⁺ wird vom Fachmann je nach den gewünschten Eigenschaften der Zubereitung bestimmt. Sie beträgt im Regelfalle 0,01 Gew. % bis 20 Gew. %, bevorzugt 0,1 bis 15 Gew. %, besonders bevorzugt 0,5 bis 10 Gew. %, und ganz besonders bevorzugt 1 bis 5 Gew. %, jeweils bezogen auf die Gesamtmenge aller erfindungsgemäß verwendeten Copolymere in der Formulierung.

Die Formulierung kann weiterhin mindestens ein gelöstes Phosphation umfassen. Sie enthält bevorzugt Phosphationen, falls auch Metallionen aus der Gruppe von Zn²⁺, Mg²⁺ oder Ca²⁺ vorhanden sind. Hierbei kann es sich um alle Arten von Phosphationen handeln. Beispielsweise kann es sich um von der Orthophosphate oder um Diphosphate handeln. Für den Fachmann ist klar, dass in wässriger Lösung je nach pH-Wert und Konzentration ein Gleichgewicht zwischen den verschiedenen Dissoziationsstufen der Ionen vorliegen kann.

Die Menge der Phosphationen in der Formulierung wird vom Fachmann je nach den gewünschten Eigenschaften der Formulierung festgelegt. Sie beträgt im Regelfalle 0,01 Gew. % bis 20 Gew. %, bevorzugt 0,5 bis 20 Gew. %, besonders bevorzugt 1 bis 20 Gew. % und ganz besonders bevorzugt 5 bis 20 Gew. %, jeweils gerechnet als Orthophosphorsäure und jeweils bezogen auf die Copolymere.

Die Metallionen, insbesondere die Metallionen aus der Gruppe von Al³⁺, Zn²⁺, Mg²⁺ oder Ca²⁺ und die Phosphationen können bevorzugt in Form von löslichen Salzen eingesetzt, welche beide Ionen enthalten. Beispiele derartiger Verbindungen umfassen Zn₃(PO₄)₂, ZnH₂PO₄, Mg₃(PO₄)₂ oder Ca(H₂PO₄)₂ bzw. entsprechende Hydrate davon.

Die Ionen können aber auch getrennt voreinander zugegeben werden. Beispielsweise können die Metallionen in Form der entsprechenden Nitrate eingesetzt werden, und die Phosphationen können in Form von Phosphorsäure in die Zubereitung eingebracht werden. Es ist auch möglich, unlösliche- oder schwerlösliche Verbindungen, wie beispielsweise die entsprechenden Carbonate, Oxide, Oxidhydrate oder Hydroxide einzusetzen, welche unter dem Einfluss von Säure gelöst werden. Bei einem kontinuierlichen Beschichtungsprozess wird die überschüssige Passivierungslösung in der Regel zurückgeführt. Bei diesem Rückführprozess können Metallionen auch durch teilweises Auflösen des zu beschichtenden Formkörpers eingetragen werden.

Optional kann die Zubereitung weiterhin mindestens ein in der Formulierung dispergiertes Wachs enthalten. Selbstverständlich können auch Gemische verschiedener Wachse eingesetzt werden. Der Begriff "Wachs" umfasst hier sowohl das eigentliche Wachs wie auch zur Bildung einer Wachsdispersion gegebenenfalls verwendete Hilfsmittel. Dem Fachmann sind Wachse zum Einsatz in wässrigen Dispersionen bekannt, und er trifft eine geeignete Auswahl. Bei den Wachsen kann es sich beispielsweise um Montanwachse, Polyethylenwachse, Wachse auf Basis von oxidiertem Polyethylen, auf Basis von fluoriertem Polyethylen wie PTFE oder anderen, auf C, H und F basierenden Polymeren handeln. Der Begriff "Polyethylen" soll außerdem Copolymere aus Ethylen und anderen Monomeren, insbesondere anderen Olefinen wie beispielsweise Propylen umfassen. Bevorzugt umfassen derartige Ethylencopolymere mindestens 65 Gew. % Ethylen. Durch den Zusatz von Wachsen kann die Reibung der Oberfläche mit der Oberfläche der zum Umformen eingesetzten Werkzeuge vorteilhaft herabgesetzt werden.

Die Menge von optional eingesetzten Wachsen wird vom Fachmann je nach den gewünschten Eigenschaften der Passivierungsschicht bestimmt. Bewährt hat sich im Regelfalle eine Menge von 0,01 bis 70 Gew. %, bevorzugt 0,5 bis 25 und besonders bevorzugt 0,5 bis 10 Gew. %, jeweils bezogen auf das bezogen auf die erfindungsgemäß eingesetzten Copolymere.

Über die genannten Metallionen, Phosphate sowie Wachse hinaus kann die eingesetzte Zubereitung auch noch weitere Komponenten umfassen. Als Beispiele können oberflächenaktive Verbindungen, Korrosionsinhibitoren, Komplexbildner, Oxidationsmittel, typische Galvanohilfsmittel oder auch weitere, von den erfindungsgemäß verwendeten Copolymeren zu unterscheidende Polymere genannt werden. Weitere mögliche Additive sind übliche Lackadditive, wie sie in H. Kittel (Hrsg.) Lehrbuch der Lacke und Beschichtungen, Band 5 -- Pigmente, Füllstoffe und Farbmetrik --2. Aufl. S. Hirzel-Verlag, Stuttgart 2003, beschrieben sind.

Der Fachmann trifft unter derartigen weiteren optionalen Komponenten sowie hinsichtlich ihrer Mengen je nach der gewünschten Anwendung eine entsprechende Auswahl. Die Menge derartiger optionaler Komponenten sollte aber im Regelfalle nicht mehr als 20 Gew. %, bevorzugt nicht mehr als 10 Gew. % und besonders bevorzugt nicht mehr als 5 Gew. % bezogen auf die Copolymere betragen.

Die für das erfindungsgemäße Verfahren einzusetzenden Zubereitungen können durch einfaches Mischen der Komponenten erhalten werden. Falls Wachse verwendet werden, werden diese bevorzugt zunächst separat in Wasser dispergiert und als Dispersion mit den anderen Komponenten gemischt. Derartige Wachsdispersionen sind auch kommerziell erhältlich.

Zum Passivieren metallischer Oberflächen wird die Oberfläche des Metalls mit der Zubereitung in Kontakt gebracht, beispielsweise durch Sprühen, Tauchen oder Aufwalzen. Hierzu wird bevorzugt nur die erfindungsgemäße saure Formulierung eingesetzt. Es ist aber auch möglich, die erfindungsgemäße saure Formulierung mit anderen, mit der erfindungsgemäßen Formulierung mischbaren Formulierungen zum Passivieren zu vermischen, und eine derartige Mischung einzusetzen, vorausgesetzt, es treten keine negativen Effekte auf.

Hinsichtlich der Verfahrenstechnik zur Durchführung der Passivierung bestehen eine Reihe von Durchführungsmöglichkeiten. Diese richten sich unter anderem nach der Form des Werkstückes, beispielsweise, ob noch ein unausgeformtes, flaches Metallband oder ein Metallblech oder ein Formkörper eingesetzt wird, der beispielsweise gekrümmte Flächen oder Kanten aufweist. Die Behandlung kann auch mehrere, einzelne Verfahrensschritte umfassen. Es kann sich um kontinuierliche oder um diskontinuierliche Verfahren handeln. Der Fachmann trifft unter den möglichen Verfahren eine geeignete Auswahl.

Die Behandlung kann beispielsweise durch Eintauchen in die Zubereitung oder durch Besprühen oder Bestreichen mit der Zubereitung vorgenommen werden. Auf Metallbänder und Bleche kann die Zubereitung bevorzugt aufgewalzt werden. Weiterhin bevorzugt kann das Metallband auch durch eine Wanne oder eine Sprühvorrichtung mit der Zubereitung gefahren werden. Überschüssige Passivierungslösung kann durch Abquetschwalzen entfernt und wieder der Sprühvorrichtung zugeführt werden. Die Sprühvorrichtung kann einen kontinuierlichen Sprühnebel erzeugen oder aber das Band nur mit der Zubereitung betropfen. Üblich sind beispielsweise Gießbalken, die aus einem Rohr bestehen, in dem in einem Abstand von 2 bis 10 cm Öffnungen angebracht sind, durch die die Zubereitung auf das Band gespritzt wird. Das Verlaufen der Zubereitung und das anschließende Abquetschen führen dann zu einer hinreichenden Verteilung des Produkts. Zusätzliche mit Druckluft betriebene Düsen können im Randbereich des Bandes eine gleichmäßige Verteilung der Zubereitung gewährleisten. Ein kontinuierliches Verfahren zur Herstellung von Stahlbändern kann auch eine Verzinkungsstation, gefolgt von einer Vorrichtung zum Passivieren mit der Zubereitung umfassen.

Beim Aufwalzen wird in der Regel das Beschichtungsmittel mit einer Aufnahmewalze aus einem Trog aufgenommen und dann auf eine Auftragswalze übertragen. Die Auftragswalze überträgt das Beschichtungsmittel auf das Band. Aufnahmewalze und Auftragswalze können über eine dazwischenliegende Walze gekoppelt sein, über die das Beschichtungsmittel übertragen wird. Die Walzen können sich im gleichen oder entgegengesetzten Drehsinn drehen und mit oder gegen die Bandrichtung laufen. Das Beschichtungsresultat kann außerdem durch die Wahl des Anpressdrucks der Walze auf das Band und durch die Rauigkeit und Härte der Rolle bestimmt werden.

Nach einem Tauchprozess oder Sprühprozess kann man zum Entfernen überschüssiger Behandlungslösung das Werkstück abtropfen lassen; bei Blechen, Metallfolien oder dergleichen lässt sich überschüssige Behandlungslösung aber beispielsweise auch abquetschen oder abrakeln. Es ist auch möglich, die Oberfläche nach der Behandlung mit einer Reinigungsflüssigkeit, insbesondere mit Wasser, nachzuspülen, um Reste der eingesetzten Zubereitung von der Oberfläche zu entfernen.

In einer alternativen Ausführungsform kann sich bei der Behandlung auch um einen sogenannten "No-rinse" Prozess handeln, bei dem die Behandlungslösung unmittelbar nach dem Aufbringen ohne Abspülen direkt in einem Trockenofen eingetrocknet wird.

Die Behandlung mit der Zubreitung kann bei Raumtemperatur oder auch bei erhöhten Temperaturen erfolgen. Im Regelfalle erfolgt die Behandlung bei 20 bis 90°C, bevorzugt 25 bis 80°C und besonders bevorzugt 30 bis 60°C. Hierzu kann beispielsweise ein Bad mit der Zubereitung geheizt werden, eine erhöhte Temperatur kann sich aber auch automatisch einstellen, indem man warmes Metall in ein Bad eintaucht.

Die Behandlungsdauer wird vom Fachmann je nach den gewünschten Eigenschaften der Schicht, der zur Behandlung eingesetzten Zusammensetzung und den technischen Rahmenbedingungen festgelegt. Sie kann deutlich weniger als eine Sekunde oder mehrere Minuten betragen. Beim kontinuierlichen Verfahren hat es sich besonders bewährt, die Oberfläche mit der Zubereitung für eine Dauer von 1 bis 60 s in Kontakt zu bringen.

Nach der Behandlung wird das eingesetzte Lösemittel, d.h. in der Regel das Wasser entfernt. Die Entfernung kann bei Raumtemperatur durch einfaches Verdampfen an Luft bei Raumtemperatur erfolgen.

Das Entfernen des Lösemittels kann aber auch durch geeignete Hilfsmittel unterstützt werden, beispielsweise durch Erwärmung und/oder durch Überleiten von Gasströmen, insbesondere Luftströmen. Das Abdampfen des Lösemittels kann beispielsweise durch IR-Strahler oder induktive Heizung unterstützt werden, oder auch beispielsweise durch Trocknen in einem Trockenkanal. Bewährt hat sich zum Trocknen eine Temperatur von 30°C bis 210°C, bevorzugt 40°C bis 120°C und besonders bevorzugt 40°C bis 80°C. Gemeint ist hiermit die auf dem Metall gefundene Spitzentemperatur (Peak metal temperature (PMT)), die durch dem Fachmann geläufige Verfahren (beispielsweise berührungslose Infrarotmessung oder Bestimmung der Temperatur mit aufgeklebten Teststreifen) gemessen werden kann. Die Trocknertemperatur muss gegebenenfalls höher eingestellt werden und wird vom Fachmann entsprechend gewählt.

Das erfindungsgemäße Verfahren kann optional auch noch einen oder mehrere Vorbehandlungsschritte umfassen. Beispielsweise kann die metallische Oberfläche vor dem Passivieren mit der erfindungsgemäß eingesetzten Zubereitung gereinigt werden, z.B. um Fette oder Öle zu entfernen. Weiterhin kann sie vor dem Passivieren auch gebeizt werden, um oxidische Beläge, Zunder, einen temporären Korrosionsschutz und dergleichen zu entfernen. Weiterhin muss die Oberfläche nach und zwischen derartigen Vorbehandlungsschritten auch gegebenenfalls mit Wasser gespült werden, um die Reste von Spüllösungen oder Beizlösungen zu entfernen.

Die erfindungsgemäße Passivierungsschicht kann vernetzt sein. Vernetzung kann insbesondere dadurch erreicht werden, indem man (Meth)acrylsäureester mit solchen Resten R² wählt, die noch über eine mit COOH-Gruppen reaktive funktionelle Gruppe verfügen. Zu nennen sind hier insbesondere Rest R² mit OH-Gruppen, ganz besonders Reste mit primären OH-Gruppen. Beispiele derartiger Monomere umfassen 2-Hydroxy-ethyl(meth)acrylat, 3-Hydroxypropyl(meth)acrylat oder 4-Hydroxybutyl(meth)acrylat. Weiterhin geeignet zum Vernetzen sind auch die Reste R^{2c}. wie beispielsweise Glucosereste. Die OH-Gruppen dieser Monomere können insbesondere bei höheren Temperaturen gut mit COOH-Gruppen reagieren. Der erzielbare Vernetzungsgrad hängt naturgemäß auch davon ab, in welchem Verhältnis OH-Gruppen und COOH-Gruppen im erfindungsgemäß verwendeten Copolymer vorhanden sind.

Selbstverständlich kann eine vernetzte Passivierungsschicht auch erhalten werden, indem man der erfindungsgemäßen Zubereitung auch noch zusätzlich einen Vernetzer beimischt. Bevorzugt werden hierfür Vernetzer eingesetzt, deren Vernetzungsmechanismus erst durch einen externen Impuls (z. B. Temperaturerhöhung, photochemische Bestrahlung) ausgelöst wird.

Es können aber auch reaktivere Vernetzer eingesetzt werden. Um vorzeitiges Reagieren zu vermeiden, kann man beispielsweise derartige Vernetzer der Formulierung erst kurz vor der Applikation auf das metallische Werkstück zugeben. Alternativ kann auch zunächst das Metall mit einer Zubereitung ohne Vernetzer behandelt werden und danach die aufgebrachte Schicht mit einem geeigneten Vernetzer behandelt werden, beispielsweise mit der Lösung eines Vernetzers besprüht werden. Es ist auch die umgekehrte Vorgehensweise denkbar.

Vernetzung kann beispielsweise durch Zugabe eines di- oder polyfunktionellen Reaktionspartners erfolgen, der mit funktionellen Gruppen der Monomer A-D Bindungen bilden kann können. Geeignete Reaktion zur Vernetzung bzw. Venetzungsmechanismen können beispielsweise sein:
a) Kovalente Vernetzung: z. B. Veresterungen, Veretherungen, Umsetzungen von Epoxiden oder Aziranen mit Nucleophilen, Amidierungen, Acetalisierung, Urethanbildung;
b) Ionische Vernetzung, Bildung von Polyelektrolytkomplexen;
c) Wasserstoffbrückenbildung, Van-der-Waals-Bindungen; oder

Die Vernetzung kann auch durch Verschlaufung der Polymerketten (z. B. durch photochemisch induzierte Vernetzung zugegebener photosensitiver Komponenten) erfolgen.

Beispiele geeigneter Vernetzer umfassen Di- oder polyfuntionelle Alkohole, Amine, Carbonsäuren, Aldehyde, Thiole, Isocyanate, Isocyanurate, blockierte Isocyantate, Melamin-Formaldehyd-Kondensate, Epoxide, Carbodiimide oder Azirane. Es kann sich um niedermolekulare, oligomere oder auch polymere Vernetzer handeln.

Sofern Vernetzer als Bestandteil der Formulierung verwendet werden, sollten diese bevorzugt wasserlöslich oder wasserdispergierbar sein, müssen aber zumindest in der erfindungsgemäßen Formulierung löslich bzw. dispergierbar sein. Vernetzer, die separat von der sauren Formulierung im oben beschriebenen zweistufigen Prozess eingesetzt werden, müssen nicht zwingend wasserlöslich oder wasserdispergierbar sein.

Beispiele geeigneter Vernetzer umfassen wasserlösliche Di- oder Polycarbonsäuren, wie beispielsweise Oxal-, Malon-, Malein-, Itacon-, Citracon-, Mesacon-, Bernstein-, Glutar-, Adipin-, Sebacin-, Kork-, Citronensäure und Polyhydroxydicarbonsäuren vom Typ der Zuckersäuren. Weitere Beispiele umfassen Hydroxycarbonsäuren wie beispielsweise Milchsäure, Äpfelsäure, Tartronsäure, Weinsäure, Mandelsäure, Citronensäure sowie Onsäuren der Monosaccharide. Beispielhaft sei hier Gluconsäure erwähnt.

Weiterhin kann eine Vernetzung auch durch Zusatz von Di-, Tri- oder Oligo-Alkoholen vorgenommen werden. Bevorzugt können hierfür Substanzen eingesetzt werden, die über mindestens zwei Strukturelemente des Typs -CH₂OH im Molekül verfügen. Beispiele umfassen 1,2-Ethylenglykol, 1,3-Propylenglykol, 1,4-Butandiol, 1,5-Pentandiol, 1,6-Hexandiol, Neopentylglycol, Glycerin, Pentaerythritol, Diethylenglykol, Triethylenglykol und Polyethylenglykol.

Beispiele für Vernetzer auf Basis von Epoxiden umfassen niedermolekulare Verbindungen mit zwei Epoxygruppen wie Ethylenglycoldiglycidylether, Butandioldiglycidylether, Hexandioldiglycidylether, Sorbitolpolyglycidylether, Ethylen- oder Polyethylenglycoldiglycidylether, Polypropylenoxidglycoldiglycidylether, Glycerinpolyglycidylether, Polyglyceringlycidylether Phthalsäurediglycidylether oder cycloaliphathische Verbindungen wie 3,4-Epoxicyclohexancarbonsäure-3',4'-epoxycyclohexylmethylester.

Weiterhin können auch die von WO 2005/42801 offenbarten wasserlöslichen Aziran- und Oxiranvernetzer verwendet werden.

Beispiele geeigneter Melaminderivate umfassen beispielsweise Hexamethylolmelamin oder Hexamethoxymethylmelamin oder auch ggf. modifizierte Aminoplastharze. Melamin-Formaldehyd-Gruppen umfassende Vernetzer sind auch kommerziell erhältlich, beispielweise die Luwipal® Marken (Fa. BASF AG).

Isocynatvernetzer können bevorzugt in dem oben beschriebenen zweistufigen Vernetzungsprozess eingesetzt werden. Isocyanatgruppen haltige Vernetzer können die üblicherweise in der Polyurethanchemie eingesetzten Polyisocyanate sein, beispielsweise aliphatische, aromatische und cycloaliphatische Di- und Polyisocyanate, wobei die aliphatischen Kohlenwasserstoffreste beispielsweise 4 bis 12 Kohlenstoffatome, und die cycloaliphatischen oder aromatischen Kohlenwasserstoffreste beispielsweise 6 bis 15 Kohlenstoffatome oder die araliphatischen Kohlenwasserstoffreste beispielsweise 7 bis 15 Kohlenstoffatome aufweisen, mit einer NCO Funktionalität von mindestens 1,8, bevorzugt 1,8 bis 5 und besonders bevorzugt 2 bis 4 in Frage, sowie insbesondere deren Isocyanurate, Biurete, Allophanate und Uretdione, Oxadiazintrione, Iminooxadiazindione, Uretonimin-modifizierte Polyisocyanate. Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Ester des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, trans/trans-, das cis/cis- und das cis/trans-Isomere des 4,4'- oder 2,4'-Di(isocyanatocyclohexyl)methan, 1-Isocyanato-3,3,5-trimethyl-5-(isocyanatomethyl)cyclohexan (Isophorondiisocyanat), 2,2-Bis-(4-isocyanatocyclohexyl)-propan, 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanato-diphenyl-methan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, 1,4-Diisocyanatobenzol oder Diphenylether-4,4'-diisocyanat. Isocyanatgruppen umfassende Vernetzer sind kommerziell erhältlich, beispielsweise unter der Marke Basonat® (Fa. BASF AG).

Es können bevorzugt auch blockierte Polyisocyanate als Vernetzer eingesetzt werden. Bei der Blockierung wird die Isocyanatgruppe reversibel mit einem Blockierungsmittel umgesetzt. Das Blockierungsmittel wird beim Erhitzen auf höhere Temperaturen wieder abgespalten. Beispiele geeigneter Blockierungsmittel sind in DE-A 199 14 896, Spalte 12, Zeile 13 bis Spalte 13, Zeile 2 offenbart. Besonders bevorzugt werden mit ε-Caprolactam blockierte Polyisocyanate eingesetzt.

Die Menge an optional zugesetztem Vernetzer beträgt in der Regel nicht mehr als 20 mol %, bevorzugt nicht mehr als 15 mol % und besonders bevorzugt nicht mehr als 10 mol %, jeweils bezogen auf das Monomer A.

Die Vernetzung kann bevorzugt unter Temperaturerhöhung vorgenommen werden. Bevorzugt kann die Vernetzung kombiniert mit der Trocknung der Schicht vorgenommen werden. Bei Vernetzern, deren Wirkung auf der Ausbildung von Esterbindungen beruht, wird der Vernetzungsgrad durch die Parameter Temperatur, Konzentration des Vernetzers, Wassergehalt und Veresterungskatalysator bestimmt. Der Fachmann wählt die Parameter so, dass der gewünschte Vernetzungsgrad resultiert.

Wird die Passivierungsschicht überlackiert, so kann auch ein Einbrennschritt für die Lackschicht zur gleichzeitigen Vernetzung der darunter liegenden Passivierungsschicht genutzt werden.

Mittels des erfindungsgemäßen Verfahrens ist eine Passivierungsschicht bzw. Konversionsschicht, insbesondere auf einer metallischen Oberfläche aus Zn, Zn-Legierungen, Al oder AI-Legierungen erhältlich. Im Zuge der Behandlung der Oberfläche löst sich ein Teil des zu schützenden Metalls auf, und wird gleich darauf wieder in einen oxidischen Film auf der Metalloberfläche eingebaut. Durch die erfindunsgemäße Verwendung der Copolymere verläuft das oberflächliche Lösen besonders gut, und es wird ein ausgezeichneter Korrosionsschutz erhalten. Die genaue Struktur und Zusammensetzung der Passivierungsschicht ist uns nicht bekannt. Sie umfasst aber neben den üblichen a-morphen Oxiden des Aluminiums oder Zinks sowie ggf. weiterer Metalle auch die Reaktionsprodukte des Polymers sowie gegebenenfalls des Vernetzers und/oder weiterer Komponenten der Formulierung. Die Zusammensetzung der Passivierungsschicht ist im Allgemeinen nicht homogen, sondern die Komponenten scheinen Konzentrationsgradienten aufzuweisen.

Die Dicke der Passivierungsschicht wird vom Fachmann je nach den gewünschten Eigenschaften der Schicht eingestellt. Im Regelfalle beträgt die Dicke 0,01 bis 3 µm, bevorzugt 0,1 bis 2,5 µm, und besonders bevorzugt 0,2 bis 1,5 µm.
Die Dicke lässt sich beispielsweise über die Art und Menge der aufgetragenen Komponenten sowie die Einwirkzeit beeinflussen. Weiterhin lässt sie sich durch verfahrenstechnische Parameter beeinflussen, beispielsweise durch Abrakeln oder Abwalzen zu viel aufgebrachter Behandlungslösung.

Die Dicke der Schicht wird dabei durch Differenzwägung vor und nach Einwirkung der erfindungsgemäß eingesetzten Zusammensetzung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist. Diese dünnen Schichten genügen, um einen hervorragenden Korrosionsschutz zu erzielen. Durch solche dünnen Schichten ist die Maßhaltigkeit der passivierten Werkstücke gewährleistet.

Ein weiterer Gegenstand der vorliegenden Anmeldung ist eine metallische Oberfläche, welche die erfindungsgemäße Passivierungsschicht umfasst. Die Passivierungsschicht ist unmittelbar auf der eigentlichen Metalloberfläche aufgebracht. In einer bevorzugten Ausführungsform handelt es sich um ein Bandmetall aus Stahl, welches eine Beschichtung aus Zn oder einer Zn-Legierung umfasst, und auf der eine erfindungsgemäße Passivierungsschicht aufgebracht ist. Es kann sich weiterhin um eine Automobilkarosserie handeln, welche mit der erfindungsgemäßen Passivierungsschicht überzogen ist.

Die metallische Oberfläche mit Passivierungsschicht kann in einer bevorzugten Ausführungsform der Erfindung in prinzipiell bekannter Art und Weise mit einer oder mehreren farb- oder effektgebende Lackschichten überlackiert werden. Typische Lacke, deren Zusammensetzung sowie typische Schichtfolgen bei mehreren Lackschichten sind dem Fachmann prinzipiell bekannt. Dabei zeigt sich, dass die erfindungsgemäße Passivierung die Lackhaftung verbessert und einen Unterwanderungsschutz erzeugt.

Das erfindungsgemäße Verfahren zur Passivierung kann auf verschiedenen Verarbeitungsstufen eingesetzt werden. Sie kann beispielsweise bei einem Stahlhersteller vorgenommen werden. Hierbei kann ein Stahlband in einem kontinuierlichen Verfahren verzinkt und unmittelbar nach der Verzinkung durch Behandeln mit der erfindungsgemäß verwendeten Formulierung passiviert werden. Eine Passivierung in diesem Stadium wird vom Fachmann häufig auch als "Nachbehandlung" bezeichnet.

Hierbei kann es sich nur um eine temporäre Passivierung handeln, die zum Korrosionsschutz bei der Lagerung und beim Transport und/oder bei weiteren Verfahrensschritten dient, aber vor dem Aufbringen des permanenten Korrosionsschutzes wieder entfernt wird. Die Copolymere lassen sich durch eine Reinigung mit wässrigen alkalischen Lösungen wieder von der Oberfläche entfernen.

Es kann sich aber auch um eine permanente Korrosionsschutzbehandlung handeln, die auf dem Band oder dem fertig ausgeformten Werkstück verbleibt und mit zusätzlichen Lackschichten versehen wird. Eine Passivierung in diesem Stadium wird vom Fachmann häufig auch als "Vorbehandlung" bezeichnet.

Die folgenden Beispiele sollen die Erfindung näher erläutern:

### Allgemeines:

Die angegebenen Reaktionstemperaturen beziehen sich auf die Innentemperatur im Reaktionsgefäß.

Die K-Werte wurden nach H. Fikentscher, Cellulose-Chemie, Bd. 13, S. 58-64 und 71-74 (1932) in 1 Gew.-%iger wäßriger Lösung bei 25°C ohne pH-Korrektur gemessen.

Die Feststoffgehalte wurden durch zweistündiges Erhitzen im Vakuumtrockenschrank bei 120°C und Differenzwägung bestimmt.

Der Restmonomergehalt an Vinylphosphonsäure wurde mittels ³¹P-NMR-Spektren bestimmt.

Der Veresterungsgrad der COOH-Gruppen wurde durch ¹H-NMR-Spektren unmittelbar nach der Synthese bestimmt. Werden verschiedene Monomere A oder verschiedene Alkohole verwendet, bezieht sich die Angabe des Veresterungsgrades auf die Einzelkomponenten Aⁿ bzw. die entsprechenden Alkohole.

Die M_{w}-Werte werden mittels Gelpermeationschromatographie (GPC) bestimmt. Die Kalibrierung der GPC erfolgt mit einer breit verteilten Na-PAA-Mischung, deren integrale Molekulargewichtsverteilungskurve durch SEC- Laserlichtstreukopplung bestimmt wird, nach dem Kalibrierverfahren von M.J.R. Cantow u.a. (J.Polym.Sci. ,A-1, 5(1967)1391-1394), allerdings ohne die dort vorgeschlagene Konzentrationskorrektur.

Verwendete Abkürzungen:
- AS: Acrylsäure
- BDMA: 1,4-Butandiolmonoacrylat
- CS: Citronensäure
- DMAEA: Dimethylaminoethylacrylat
- DMAEMA: Dimethylaminoethylmethacrylat-Methylsulfat
- DMEA: N,N-Dimethylethanolamin
- DPG: Dipropylenglycol
- EDGA: Ethyldiglykolmonoacrylat
- EG: 1,2-Ethylenglycol
- Glu: Glucose
- H2O2: Wasserstoffperoxid
- HDDA: 1,6-Hexandioldiacrylat
- HEA: Hydroxyethylacrylat
- HEMA: Hydroxyethylmethacrylat
- HEMA-P: Ethylenglycolmethacrylat-Phosphat
- HPA: Hydroxypropylacrylat
- IS: Itaconsäure
- MA: Methylacrylat
- MBA: Methylenbisacrylamid
- MPEG1000MA: Methyl-PEG-1000-Methacrylat
- MS: Maleinsäure
- NaPS: Natriumperoxodisulfat
- PEGDA: PEG-400diacrylat
- PG: 1,2-Propylenglycol
- tBPO: tert-Butylperoktoat
- TEA: Triethanolamin
- TPG: Triproylenglycol
- V50: Azo V50 (Fa. Wako)
- VPS: Vinylphosphonsäure

### Teil A: Herstellung der erfindungsgemäßen Copolymere

### Allgemeine Arbeitsvorschrift 1:

### Synthese der erfindungsgemäßen Copolymere aus Mono(meth)acrylsäureestern und Vinylphosphonsäure

In einem 2l-Rührtopf mit Ankerrührer und Innenthermometer wird die entsprechende Menge des Monomers B (Phosphor- oder Phosphonsäuregruppen aufweisende Monomere) als wässrige Lösung (40-95%ig) vorgelegt, mit Stickstoff inertisiert und auf Reaktionstemperatur aufgeheizt. Über 3 bis 5 Stunden wird ein Zulauf 1 einer wässrigen Lösung des jeweils gewünschten Monomers A (Mono(meth)acrylsäureester (100 bis 50%ige Lösung), und gleichzeitig über 4 bis 6 Stunden wird ein Zulauf einer wässrigen Inititiatorlösung (5 bis 30%ig) zugefahren. Anschließend wird zwei Stunden bei Reaktionstemperatur gerührt. Ggf. wird mit Wasser verdünnt.

Werden schwer wasserlösliche Monomere verwendet, so wird ein dritter Zulauf benutzt. Das Monomer wird hierzu nicht weiter verdünnt. Werden Basen verwendet, so werden diese mit der Vinylphosphonsäure vor der Polymerisation im Reaktionsgefäß vorgelegt.

Die Monomereinheiten (C) bilden sich durch Hydrolyse aus den Monomereinheiten (A). Sofern zusätzliche Mengen den Monomere (C) zugegeben werden, können diese - sofern sie mit den Monomeren (A) homogen mischbar sind - gemeinsam mit den Monomeren (A) zugefahren werden. Sind beide Monomere nicht verträglich miteinander mischbar, werden sie jeweils über einen separaten Zulauf zugefahren.

In einer Variante der Vorschrift können auch kleinere Mengen des Monomers (A) sowie des Starters vorgelegt werden und der Rest der Monomere wie beschrieben zugefahren werden.

Die jeweils verwendeten Einsatzstoffe, die genauen Versuchsparameter, der Veresterungsgrad und die weiteren Ergebnisse sind in Tabelle 1 zusammengestellt. Die K-Werte wurden nach nach H. Fikentscher, Cellulose-Chemie, Bd. 13, S. 58-64 und 71-74 (1932) in 1 Gew.-%iger wäßriger Lösung bei 25°C bei pH-Wert 7 gemessen.

In Tabelle 1a ist der Zusammenhang zwischen dem Veresterungsgrad in mol % und der Zusammensetzung des Polymers in Gew. % dargestellt.

### Allgemeine Arbeitsvorschrift 2:

### Polymeranaloge Veresterung

Als Ausgangsmaterial für die Synthese wurden die in Tabelle 3 aufgeführten Polymere aus Vinylphosphonsäure sowie Acrylsäure bzw. Maleinsäure eingesetzt. Die Herstellung derartiger Polymere ist beispielsweise in WO 2004/074372 offenbart. Acrylsäure-VPS-Copolymere sind kommerziell erhältlich.

In einem 2l Rührtopf mit Ankerrührer und Innenthermometer werden 469,4 g des jeweiligen Polymers mit 128,6 g 1,2-Propylenglykol gemischt und unter Rühren für 8h auf 100°C erhitzt.

Die jeweils verwendeten Einsatzstoffe, die genauen Versuchsparameter und die Ergebnisse sind in Tabelle 2 zusammengestellt. In Tabelle 3a ist der Zusammenhang zwischen dem Veresterungsgrad in mol % und der Zusammensetzung des Polymers in Gew. % dargestellt.

### Allgemeine Arbeitsvorschrift 3:

### Veresterung während der Polymerisation

In einem 2l Rührtopf mit Ankerrührer und Innenthermometer 226,5 g Vinylphosphonsäure (95%ig) und 353,6 g 1,2-Propylenglykol (100 mol % bezügl. COOH) vorgelegt, mit Stickstoff inertisiert und auf 100°C erhitzt. Es werden 0,55 g Eisen(II)sulfat-Heptahydrat in 10 g deionisiertem Wasser zugegeben. Danach wird ein Zulauf 1 aus 334,9 g Acrylsäure in 205,6 g deionisiertem Wasser über 4 und gleichzeitig ein Zulauf 2 aus 91,7 g Wasserstoffperoxid (30%ig) über 5 Stunden zudosiert. Anschließend wird zwei Stunden bei Reaktionstemperatur gerührt. Gegebenenfalls wird mit Wasser verdünnt.

Es können auch andere Alkohole und/oder Monomere bzw. andere Mengen verwendet werden. Die jeweils verwendeten Einsatzstoffe, die genauen Versuchsparameter und die Ergebnisse sind in Tabelle 3 zusammengestellt. In Tabelle 3a ist der Zusammenhang zwischen dem Veresterungsgrad in mol % und der Zusammensetzung des Polymers in Gew. % dargestellt.

Wird als Comonomer Itaconsäure oder Maleinsäure(anhydrid) verwendet, werden diese Monomere zu der Vorlage gegeben. Sofern Acrylate als Comonomere verwendet werden, werden diese gleichzeitig mit der Acrylsäure zur Reaktionsmischung zudosiert.

**Tabelle 1: Synthese der erfindungsgemäßen Copolymere aus den Monomeren gemäß allgemeiner Arbeitsvorschrift 1:**

| Polymer-Nr. | Eingesetzte Monomere und deren Mengen [Gew.-%] | | Menge Initiator¹ [Gew. %] | T [°C] | Menge Base² [mol %] bzgl. VPS | Feststoffgehalt nach Polymerisation [Gew. %] | K-Wert [1%ig] | Veresterungsgrad [mol%]³ | Restgehalt VPS² [mol %] | Bemerkungen |
|---|---|---|---|---|---|---|---|---|---|---|
| 1 | BDMA / VPS | 75/25 | 6% NaPS | 100 | 0 | 19,0 | 47,4 | >50 | 2,6 | |
| 2 | BDMA / VPS | 75/25 | 6% V50 | 80 | 0 | 31,0 | 18,4 | >80 | 3,6 | |
| 3 | DMAEA / VPS | 75/25 | 6% V50 | 80 | 0 | 49,0 | 25 | n.b. | <1 | |
| 4 | DMAEMA / VPS | 92/8 | 6% NaPS | 100 | 0 | 45,7 | 11,3 | >80 | 10 | |
| 5 | EDGA / VPS (iPrOH / H₂O | 79/21 | 6% V50 | 80 | 0 | 36,6 | n.b. | >80 | 3,2 | |
| 6 | HEA / VPS | 62/38 | 6% NaPS | 100 | 0 | 27,9 | 27,9 | 55 | 4,7 | |
| 7 | HEA / VPS | 71/29 | 6% NaPS | 100 | 0 | 30,5 | 24,2 | 59 | 0,3 | |
| 8 | HEA / VPS | 71/29 | 6% NaPS | 100 | 0 | 28,6 | 19,6 | 48 | 1 | |
| 9 | HEA / VPS | 81/19 | 6% NaPS | 100 | 0 | 30,4 | 20,6 | 68 | 0 | |
| 10 | HEA / VPS | 91/9 | 6% NaPS | 100 | 0 | 28,8 | 19,8 | 75 | 0 | |
| 11 | HEA / AS / MS / VPS | 53/23/8/16 | 6% NaPS | 100 | 22% TEA | 29,5 | 19,7 | n.b. | 1,6 | |
| 12 | HEA / MS / VPS | 60/20/20 | 3,5% NaPS | 100 | 50% TEA | 48,9 | 19,6 | n.b. | 3,8 | |
| 13 | HEA / HPA / VPS | 35/35/30 | 3% V50 | 80 | 0 | 44,0 | 32,9 | 78 und 81 | 1,8 | |
| 14 | HEA / HPA / VPS | 50/20/30 | 3% V50 | 80 | 0 | 44,7 | 30,7 | 83 und 87 | 2,0 | |
| 15 | HEA / HPA / VPS | 20/50/30 | 3% V50 | 80 | 0 | 44,2 | 31,5 | 83 und 85 | 2,7 | |

| Polymer-Nr. | Eingesetzte Monomere und deren Mengen [Gew.-%] | | Menge Initiator¹ [Gew. %] | T [°C] | Menge Base² [mol %] bzgl. VPS | Feststoffgehalt nach Polymerisation [Gew. %] | K-Wert [1%ig] | Veresterungsgrad [mol%] | Restge-halt VPS² [mol %] | Bemerkungen |
|---|---|---|---|---|---|---|---|---|---|---|
| 16 | HEMA / VPS | 65/35 | 6% NaPS | 100 | 0 | 29 | 12,7 | 85 | 14,3 | |
| 17 | HEMA / VPS | 74/26 | 6% NaPS | 100 | 0 | 32,1 | 14,6 | 90 | 8,2 | |
| 18 | HEMA / VPS | 74/26 | 6% NaPS | 100 | 0 | 29,3 | 13 | 90 | 15,4 | |
| 19 | HEMA / VPS | 83/17 | 6% NaPS | 100 | 0 | 29,5 | 12,3 | 91 | 10,6 | |
| 20 | HEMA / VPS | 92/8 | 6% NaPS | 100 | 0 | 32,8 | 11,9 | 94 | 17,4 | |
| 21 | HEMA / AS / MS / VPS | 53/23/8/16 | 6% NaPS | 100 | 22% TEA | 29,6 | 16,3 | n.b. | 10 | |
| 22 | HPA / VPS | 64/36 | 6% V50 | 80 | 0 | 43,7 | 32 | 85 | 1,3 | |
| 23 | HPA / VPS | 70/30 | 3% V 50 | 80 | 0 | 43,6 | 27,3 | 83 | 2,4 | M_{w} 122.000 g/mol |
| 24 | HPA / VPS | 70/30 | 6% NaPS | 100 | 0 | 30 | 20,1 | 86 | 0,5 | M_{w} 35.400 g/mol |
| 25 | HPA / VPS | 70/30 | 6% V 50 | 80 | 10% TEA | 44,3 | 21,9 | 96 | 1,2 | M_{w} 32.500 g/mol |
| 26 | HPA / VPS | 70/30 | 3% V 50 | 80 | 20% TEA | 30 | 28,6 | 94 | 9 | M_{w} 46.100 g/mol |
| 27 | HPA / VPS | 70/30 | 3% V 50 | 80 | 50% TEA | 46,7 | 23,7 | 93 | 4 | M_{w} 20.500 g/mol |
| 28 | HPA / VPS | 74/26 | 3% V50 | 80 | 0 | 34,8 | 27,2 | 72 | 2 | M_{w} 58.000 g/mol |
| 29 | HPA / VPS | 92/8 | 3% V50 | 80 | 0 | 38,5 | 25,3 | 87 | <1 | |
| 30 | HPA / AS / VPS | 42/28/30 | 6% NaPS | 100 | 0 | 43,8 | 46,8 | 78 | 3,2 | |
| 31 | HPA / AS / VPS | 52/23/25 | 6% V50 | 80 | 0 | 44,4 | 19,8 | 85 | <1 | |
| 32 | HPA / MA / VPS | 60/10/30 | 3% V 50 | 80 | 0 | 43,5 | 30,1 | 88 und 91 | 3,1 | |
| 33 | HPA / MA / VPS | 50/20/30 | 3% V 50 | 80 | 0 | 43,7 | 30,0 | 83 und 87 | 3,6 | |
| 34 | HPA / MS / VPS | 60/20/20 | 6% NaPS | 100 | 20% TEA | 48,7 | 31,4 | 81 | 3,4 | |
| 35 | HPA / MS / VPS / MBA | 68/14/16/2 | 3,5% NaPS | 100 | 43% TEA | 49,5 | 19,5 | 75 | 2,5 | |

| Polymer-Nr. | Eingesetzte Monomere und deren Mengen [Gew.-%] | | Menge Initiator¹ [Gew. %] | T [°C] | Menge Base2 [mol %] bzgl. VPS | Feststoffgehalt nach Polymeri-sation [Gew. %] | K-Wert [1%ig] | Ver-Esterungsgrad [mol%] | Restgehalt VPS² [mol %] | Bemerkungen |
|---|---|---|---|---|---|---|---|---|---|---|
| 36 | HPA / VPS / HDDA | 67/29/4 | 6% NaPS | 100 | 0 | 44,3 | 25 | 66 | <1 | |
| 37 | HPA / VPS / MBA | 66/29/5 | 6% NaPS | 100 | 0 | 45,7 | 27,9 | 64 | <1 | |
| 38 | HPA / VPS / PEGDA | 64/28/8 | 6% NaPS | 100 | 0 | 45,8 | 27,9 | 65 | <1 | |
| 39 | MPEG1000MA / VPS | 95/5 | 6% NaPS | 100 | - | 47,7 | n.b. | > 80 | 9,9 | |
| V 40 | HPA / VPS | 99 / 1 | 3% V 50 | 80 | 0 | 45,1 | 15,1 | 99 | <1 | |
| V 41 | HPA / VPS | 96 / 4 | 3% V 50 | 80 | 0 | 40,5 | 22,8 | 89 | <1 | |
| V 42 | HPA / HEMA-P | 70 / 30 | 3% V 50 | 80 | 0 | - | - | - | - | Ansatz vergelt |
| V 43 | HPA / MA / HEMA-P | 45 / 50 / 5 | 3% V 50 | 80 | 0 | - | - | - | - | Ansatz vergelt |
| V 44 | HPA / MA / HEMA-P | 49 / 50 / 1 | 3% V 50 | 80 | 0 | - | - | - | - | Ansatz vergelt |

| | | | | | | | | | | |
|---|---|---|---|---|---|---|---|---|---|---|
| Erläuterungen: ¹Initiatormenge in Gew. % bzgl. der Monomere, ²Restgehalt VPS in mol % bzgl. eingesetztem VPS, ³Veresterungsgrad in mol % bezogen auf COOH, bei mehreren Monomeren A oder Alkoholen bezogen auf die jeweilige Komponente, n.b. : nicht bestimmt; V = Vergleichsbeispiel | | | | | | | | | | |

**Tabelle 1a: Zusammensetzung der Produkt-Polymere: Bei einem Monomerenverhältnis von HPA / VPS von 70 / 30 Gew % ergibt sich folgender Zusammenhang zwischen dem Veresterungsgrad Zusammensetzung der Produktpolymere in Gew. %**

| Veresterungsgrad [mol]% | Zusammensetzung des Reaktionsprodukts [mol %] | Zusammensetzung des Reaktionsprodukts [Gew. %] |
|---|---|---|
| 95 | AS / HPA / VPS 3,3 / 62,7 / 34 | AS / HPA / VPS 2 / 68 / 30 |
| 90 | AS / HPA / VPS 6 / 60 / 34 | AS / HPA / VPS 4 / 66 / 30 |
| 80 | AS / HPA / VPS 12 / 54 / 34 | AS / HPA / VPS 7 / 61 / 32 |
| 70 | AS / HPA / VPS 18 / 48 / 34 | AS / HPA / VPS 11 / 56 / 33 |
| 60 | AS / HPA / VPS 24 / 43 / 34 | AS / HPA / VPS 16 / 51 / 33 |
| 50 | AS / HPA / VPS 30 / 36 / 34 | AS / HPA / VPS 20 / 45 / 35 |

**Tabelle 2: Synthese von Copolymeren durch polymeranaloge Veresterung gemäß allgemeiner Arbeitsvorschrift 3:**

| Polymer-Nr. | Zusammensetzung des Polymers [Gew.%] | Alkohol [Mol%] bez. COOH] | T [°C] | Feststoffgehalt nach Umsetzung¹ | K-Wert [1%ig] | Ver Esterungsgrad [mol%] |
|---|---|---|---|---|---|---|
| 45 | AS / VPS 61/39¹ | 100 PG | 100 | 33,5 | 29,2 | 14 |
| 46 | AS / MS / VPS 60/20/20 (teilneutralisiert mit 6 mol% TEA pro COOH) | 100 PG | 100 | 32,8 | 16,5 | 11 |
| 47 | AS / MS / VPS 60/20/20 (teilneutralisiert mit 6 mol% TEA pro COOH) | 100 PG | 100 | 32,6 | 16,3 | 5 |

| | | | | | | |
|---|---|---|---|---|---|---|
| Erläuterungen: ¹Inklusive Alkohol; Acrylsäure-Vinylphosphonsäure-Polymer, Gew.-Verhältnis 61/39, K-Wert 28,7, Feststoffgehalt 42,6% | | | | | | |

**Tabelle 3: Synthese von Copolymeren durch Veresterung während der Polymerisation gemäß allgemeiner Arbeitsvorschrift 2:**

| Polymer-Nr. | Eingesetzte Monomere und Mengen [Gew.-%] | Alkohol [mol% bez. COOH] | Initiator [Gew.-%]¹ | T [°C] | Feststoffgehalt nach Polymerisation [Gew. %]³ | K-Wert [1%ig] | Ver-Esterungsgrad [Mol%] | Restgehalt VPS² [Mol%] | M_{w} [g/mol] | Mw/Mn |
|---|---|---|---|---|---|---|---|---|---|---|
| 48 | AS / VPS 61 / 39 | 100 PG | 6% H₂O₂ | 120 | 45 | 13 | 38 | <1 | 17.400 | 7,9 |
| 49 | AS/VPS 61 / 39 | 100 PG | 6% H₂O₂ | 100 | 40 | 13,7 | 43 | 1,5 | 15.700 | 7,9 |
| 50 | AS / VPS 61 / 39 | 100 PG | 6% NaPS | 100 | 35 | 30,6 | 27 | <1 | 231.000 | 57,8 |
| 51 | AS / VPS 61 / 39 | 100 PG | 6% H₂O₂ | 100 | 35 | 15,7 | 25 | 6,7 | n.b. | n.b. |
| 52 | AS / VPS 61 / 39 | 100 PG | 6% V50 | 80 | 28,6 | 20,4 | 26 | <1 | n.b. | n.b. |
| 53 | AS / VPS 61 / 39 | 100 PG | 5% H₂O₂ | 100 | 45 | 14,8 | 30 | <1 | 17.300 | 6,6 |
| 54 | AS / VPS 61 / 39 | 100 PG | 5% tBPO | 100 | 40 | 32,5 | 19 | 2,3 | n.b. | n.b. |
| 55 | AS / VPS 61 / 39 | 100 PG | 6% H2O2 | 100 | 45 | 23,8 | 24 | 1,8 | 29.400 | 14,7 |
| 56 | AS / VPS 61 / 39 | 100 PG | 6% NaPS | 100 | 45 | 27,5 | 26 | 7,4 | 414.000 | 111,9 |
| 57 | AS / VPS 73 / 27 | 100 PG | 5% H2O2 | 100 | 45 | 16,7 | 28 | <1 | n.b. | n.b. |
| 58 | AS / VPS 79 / 21 | 100 PG | 5% H2O2 | 100 | 45 | 15,2 | 28 | <1 | n.b. | n.b. |
| 59 | AS / VPS 79 /21 | 100 PG | 6% H2O2 | 100 | 45 | 14,9 | 24 | <1 | n.b. | n.b. |
| 60 | AS / VPS 79 / 21 | 100 PG | 6% NaPS | 100 | 40 | 25,2 | 27 | 2,1 | n.b. | n.b. |
| 61 | AS / VPS 86 / 14 | 100 PG | 5% H2O2 | 100 | 45 | 15,1 | 33 | <1 | n.b. | n.b. |
| 62 | AS / VPS 61 / 39 | 200 PG | 5% H2O2 | 100 | 40 | 11,7 | 51 | <1 | 9.600 | 3,8 |
| 63 | AS / VPS 61 / 39 | 50 PG | 5% NaPS | 100 | 40 | 41,5 | 15 | 6,2 | 482.000 | 117,6 |
| 64 | AS / VPS 61 / 39 | 100 DPG | 5% H2O2 | 100 | 40 | 14,4 | 11 | <1 | n.b. | n.b. |
| 65 | AS / VPS 61 / 39 | 100 TPG | 5% H2O2 | 100 | 35 | n.b. | 14 | 7,3 | n.b. | n.b. |
| 66 | AS / VPS 61 / 39 | 50PG + 50DMEA | 5% H2O2 | 100 | 35 | 12,9 | 14 (10+4) | <1 | n.b. | n.b. |
| 67 | AS / VPS 61 / 39 | 70 PG + 30 EG | 5% H2O2 | 100 | 45 | 20,7 | 28 (19+9) | <1 | 70.000 | 18,4 |
| 68 | AS / VPS 61 / 39 | 80 PG + 20 PI A350E | 5% H2O2 | 100 | 35 | 13,5 | 22 (20+2) | <1 | n.b. | n.b. |
| 69 | AS / VPS 61 / 39 | 80 PG + 20 PI A500E | 5% H2O2 | 100 | 32 | 13,3 | 28 (23+5) | <1 | n.b. | n.b. |
| 70 | AS / VPS 61 / 39 | 90PG + 10CS | 5% NaPS | 100 | 35 | 45,3 | 35 | 8 | n.b. | n.b. |
| 71 | AS / VPS 61 / 39 | 90 PG + 10 Glu in Vorlage | 5% NaPS | 100 | 30,9 | 42,2 | 22 | 14,4 | n.b. | n.b. |
| 72 | AS / VPS 61 / 39 | 90 PG + 10 Glu im Zulauf | 5% NaPS | 100 | 35 | 41,7 | 36 | 11,7 | n.b. | n.b. |
| 73 | AS / VPS 61 / 39 | 95 PG + 5 Glu nach Polym. | 5% H2O2 | 100 | 45 | 17,5 | 18 | <1 | n.b. | n.b. |
| 74 | AS / VPS 61 / 39 | 95PG + 5 Glu in Vorlage | 5% NaPS | 100 | 45 | 26,8 | 29 | >10 | n.b. | n.b. |
| 75 | AS / MA / VPS 24/39/37 | 100 PG | 5% V50 | 80 | 45 | 21,5 | 25 | <1 | n.b. | n.b. |
| 76 | AS / MA / VPS 33/30/37 | 100 PG | 5% V50 | 80 | 45 | 21,5 | 27 | 1,3 | n.b. | n.b. |
| 77 | AS / MS / VPS 60/20/20 | 100 PG | 6% NaPS | 100 | 43,5 | 12,2 | 47 | <1 | n.b. | n.b. |
| 78 | AS / MS / VPS 72/7/21 | 100 PG | 6% H2O2 | 100 | 45 | 14,5 | 27 | <1 | n.b. | n.b. |
| 79 | AS / MS / VPS 72/7/21 | 100 PG | 6% NaPS | 100 | 40 | 28,3 | 30 | 3,3 | n.b. | n.b. |

| | | | | | | | | | | |
|---|---|---|---|---|---|---|---|---|---|---|
| Erläuterungen: ¹Initiatormenge in Gew. % bzgl. der Monomere, ²Restgehalt VPS in mol % bzgl. eingesetztem VPS, ³Alkohol als Lösmittel mitgerechnet, n.b. : nicht bestimmt | | | | | | | | | | |

**Tabelle 3a: Zusammensetzung der Produkt-Polymere: Bei einer Monomermischung von AS / VPS von 61 / 39 Gew% und 100 Mol% der AlkoholKomponente (bez. auf COOH-Gruppen), so ergibt sich folgender Zusammenhang zwischen Veresterungsgrad und Gew. Zusammensetzung**

| Veresterungsgrad [mol]% | Zusammensetzung des Reaktionsprodukts in [mol%] | Zusammensetzung des Reaktionsprodukts in [Gew.%] |
|---|---|---|
| 5 | AS / HPA / VPS 67,5/3,5/30 | AS / HPA / VPS 57/5/38 |
| 10 | AS / HPA / VPS 63/7/30 | AS / HPA / VPS 52/10/37 |
| 20 | AS / HPA / VPS 56/14/30 | AS / HPA / VPS 45/20/35 |
| 30 | AS / HPA / VPS 49/21/30 | AS / HPA / VPS 37/29/34 |
| 40 | AS / HPA / VPS 42/28/30 | AS / HPA / VPS 30/37/33 |

### Teil B: Verwendung der erfindungsgemäßen Copolymere zum Passivieren

Mit den hergestellten Copolymeren wurden die folgenden anwendungstechnischen Tests durchgeführt:

### Eingesetzte Formulierungen:

Es wurden jeweils wässrige Lösungen der Copolymere eingesetzt. Die Konzentration der Polymere betrug jeweils 15 - 20 Gew. % bezüglich der Summe aller Komponenten der Formulierung. Die genaue Menge ist jeweils in Tabelle 4 angegeben. Die Formulierungen enthielten ggf. noch Mg₃(PO₄)₂, Zn₃(PO₄)₂, H₃PO₄ in den in Tabelle 4 angegebenen Mengen.

Zu Vergleichswecken wurde auch ein Copolymer aus 60 Gew. % Acrylsäure, 20 Gew. %Maleinsäure und 20 Gew. % Vinylphosphonsäure eingesetzt (Herstellung gemäß WO 2006/021308).

### Verwendete Stahlbleche

Für die Beispiele und Vergleichsbeispiele wurden Prüfbleche aus heißverzinktem Stahl (Gardobond® OE HDG 3, 105 x 190 mm) eingesetzt.

### Reinigung

Falls angegeben, wurden die Bleche in eine alkalische Reinigungslösung (Ridoline® C72, Fa. Henkel) für 10-20 Sekunden getaucht, sofort mit vollentsalztem Wasser abgespült und anschließend mit Stickstoff getrocknet.

### Aufbringen einer Konversionsschicht

Die gereinigten Bleche wurden bei Raumtemperatur für jeweils 1 s in die in Tabelle 1 aufgeführten Formulierungen getaucht, mit einem Walzensystem abgequetscht und für 12 s bei 160°C im Trockenschrank (Peak-Metal-Temperatur im Zuge der Trocknung überstieg hierbei nicht 50°C) getrocknet.

### Prüfungen

Mit den mit der Konversionsschicht beschichteten Blechen wurden jeweils Korrosionstests durchgeführt, und zwar jeweils ein Kondenswasser-Wechselklimatest mit Wechsel von Luftfeuchte und -temperatur gemäß DIN 50017 - KFW sowie ein Salzsprühnebeltest (SSK) gemäß DIN 50021-SS.

### Kondenswasser-Wechselklima-Test (KFW):

Der Kondenswasser-Wechselklima-Test (DIN 51017) besteht einem oder mehreren Klimazyklen mit jeweils zwei Prüfabschnitten. Im ersten Abschnitt werden die Prüfkörper 8 Stunden bei einer Temperatur von 40 °C und einer relativen Luftfeuchtigkeit von 100%, im zweiten Abschnitt bei einer Temperatur von 18-28 °C bei einer Luftfeuchtigkeit von unter 100% (Umgebungsbedingung), belastet. Die Dauer eines Zyklus beträgt somit 24 Stunden.

Die optische Beurteilung der Proben erfolgte nach folgenden Kriterien:

| | | | |
|---|---|---|---|
| 0 | kein Auskreiden | f: | leicht fleckige Struktur |
| 1 | leichtes Auskreiden | F: | deutlich ausgeprägte fleckige Struktur |
| 2 | mittelstarkes Auskreiden | WR: | Weißrost |
| 3 | starkes Auskreiden | l-, s-, m: | leicht-, stark-, marmoriert |
| 4 | sehr starkes Auskreiden | | |

Mit "Auskreiden" wird ein Weißschleier der Beschichtung bezeichnet. Mit zunehmendem Grad der Auskreidung wird die Beschichtung immer weniger transparent.

### Salzsprühtest (SSK)

Diese Sprühnebelprüfung ist eine in DIN 50021 genormte Korrosionsprüfung, bei der man fein versprühte Natriumchlorid-Lösung auf die Probe einwirken lässt. Auf eine geneigte Probe werden bei 35 °C bezogen auf 80 cm² Fläche 1,5 ml/h der Lösung mit Hilfe befeuchteter Pressluft gesprüht. Als Lösung wurde eine 5 %ige NaCl-Lösung verwendet. Die beschichteten Proben werden unversehrt dem Test unterworfen. Die Testdauer beträgt jeweils 48 h.

### Bewertung der Bleche nach SSK:

Die Güte des Korrosionsschutzes im Salzsprühtest wurde gemäß DIN EN ISO 10289 bewertet, indem nach vorgegebenen Standards Bewertungszahlen von 0 bis 10 vergeben werden. Die Bewertungszahl ist ein Maß für die Entstehung von Weißrost auf dem Blech. Je höher die Bewertungszahl, desto geringer der Anteil der korrodierten Fläche und desto besser der Korrosionsschutz. Die Vergabe der Bewertungszahlen erfolgte gemäß folgender Tabelle:

| Fehlerfläche % | Bewertungsgrad *R*ₚ oder *R*_{A} |
|---|---|
| kein Fehler | 10 |
| 0 < A ≤ 0,1 | 9 |
| 0,1 < A ≤ 0,25 | 8 |
| 0,25 < A ≤ 0,5 | 7 |
| 0,5 < A ≤ 1,0 | 6 |
| 1,0 < A ≤ 2,5 | 5 |
| 2,5 < A ≤ 5,0 | 4 |
| 5,0 < A ≤ 10 | 3 |
| 10 < A ≤ 25 | 2 |
| 25 < A ≤ 50 | 1 |
| 50 < A | 0 |

Alle Einzelheiten zu den verwendeten Formulierungen sowie den Ergebnissen der Tests sind in den Tabelle 4 zusammengestellt.

### Test auf einer industriellen Bandverzinkungsanlage

Die Versuchsreihe wurde auf einer industriellen Bandverzinkungsanlage durchgeführt. Als Substrat wurde ein Stahlband verwendet, welches zunächst in einer Schmelztauchstation
mit einer Zinkauflage von 275 g/m² versehen wurde. Danach wurden die Formulierungen mit einem Sprühbalkensystem bei einer Bandgeschwindigkeit von 70-80 m/min auf das Band aufgetragen, mit einem Walzensystem abgequetscht und getrocknet (Peak-Metal-Temperatur < 50°C).

Es wurden wie oben beschriebene Formulierungen eingesetzt. Die genauen Versuchsparameter sind in Tabelle 5 zusammengefasst. Aus den beschichteten Bändern wurden jeweils 6 - 12 Teststücke ausgeschnitten und wie oben beschrieben getestet. Die Mittelwerte der Ergebnisse sind in Tabelle 5 zusammengefasst.

Die Beispiele 8 und 9 sind nicht erfindungsgemäss.

**Tabelle 4: Anwendungstechnische Prüfung der Copolymere:**

| Bsp. Nr. | Polymer-Nr. | Zusammensetzung¹ [Gew.%] | | Konz. | Zusätze [Gew. % bzgl. Polymer] | | | pH | Optik KFW-Test | Rl 48 h SSK | Bemerkungen |
|---|---|---|---|---|---|---|---|---|---|---|---|
| | | | | | Mg₃(PO₄)₂ | Zn₃(PO₄)₂ | H₃PO₄ | | | | |
| V1 | - | AS / MS / VPS | 60 / 20 / 20 | 15 % | 4,5 | - | 3,4 | 1,1 | 4 | 10 | Copolymer ohne Monomere (A) |
| V2 | - | HPA | 100 | 20 % | 4,5 | - | 3,4 | 3,7 | WR | 0 | Homopolymer aus Hydroxypropylacrylat |
| V3 | V 40 | HPA / AS / VPS | 98 / 1 / 1 | 20 % | 4,5 | - | 3,4 | 2,4 | WR | 0 | Geringer VPS-Gehalt |
| V4 | V 41 | HPA / AS / VPS | 90 / 6 / 4 | 20 % | 4,5 | - | 3,4 | 1,5 | WR | 0 | Geringer VPS-Gehalt |
| | | | | | | | | | | | |
| 1 | 7 | HEA / AS / VPS | 47 //21 // 32 | 15 % | - | - | - | 1 | 0- 0,5 | 6 | |
| 2 | 7 | HEA / AS / VPS | 47 / 21 / 32 | 20 % | - | - | - | 1 | 0-0,5 | 9,5 | |
| 3 | 10 | HEA / AS / VPS | 75 / 15 / 10 | 15 % | | 10 | | 2,5 | 1 | 5 | |
| 4 | 9 | HEA / AS / VPS | 61 / 18 / 21 | 15 % | | 10 | | 2,5 | 1 | 8,5 | |
| 5 | 6 | HEA / AS / VPS | 38 / 19 / 43 | 15 % | | 10 | | 2,5 | 1 | 10 | |
| 6 | 23 | HPA / AS / VPS | 61 / 7 / 32 | 15 % | 4,5 | - | 3,4 | 1 | 0 | 9,5 | |
| 7 | 24 | HPA / AS / VPS | 63 / 6 / 31 | 15 % | 4,5 | - | 3,4 | 1 | 1 | 9 | |
| 8 | 25 | HPA / AS / VPS | 68/ 2 / 30 | 20 % | 4,5 | - | 3,4 | 1,6 | 0,5f | 9 | Neutralisationsgrad Polymer 10 mol % |
| 9 | 26 | HPA / AS / VPS | 67 / 2 / 31 | 20 % | 4,5 | - | 3,4 | 2 | 0 | 7,5 | Neutralisationsgrad Polymer 20 mol % |
| 10 | 73 | HPA / AS / VPS | 18 / 46 / 36 | 20 % | 4,5 | - | 3,4 | 0,5 | 1,5 | 10 | 5% Glucose bei Polymersation zugesetzt |
| 11 | 66 | HPA / DMAEA / AS / VPS | 10 / 5 / 49 / 36 | 20 % | 4,5 | - | 3,4 | 2,1 | 1,5 | 10 | |
| 12 | 45 | HPA / AS / VPS | 14 / 48 / 36 | 20 % | - | 2,7 | 3,4 | 1 | 2 | 9 | polymeranaloge Veresterung |
| 13 | 48 | HPA / AS / VPS | 36 / 31 / 33 | 15 % | - | 10 | 3,4 | 1 | 0 | 10 | Veresterung während der Polymerisation |

| | | | | | | | | | | | |
|---|---|---|---|---|---|---|---|---|---|---|---|
| Anmerkungen: ¹In dieser Tabelle ist die tatsächliche Zusammensetzung der Polymere angegeben. Sie wurde unter Berücksichtigung der in den in Tabellen 1,2 und 3 experimentell bestimmte Veresterungsgrade unmittelbar nach der Synthese gemessen. | | | | | | | | | | | |

**Tabelle 5: Applikation der Copolymere im Anschluss an die Schmelztauchverzinkung auf einer industriellen Bandverzinkungsanlage**

| Bsp. Nr. | Polymer-Nr. | Zusammensetzung¹ [Gew.%] | | Konz | Zusätze [Gew. % bzgl. Polymer] | | | | | | | pH | Optik KFW-Test | Rl 48 h SSK | Bemerkungen |
|---|---|---|---|---|---|---|---|---|---|---|---|---|---|---|---|
| | | | | | Mg₃ (PO₄)₂ | H₃PO₄ | HNO₃ | CH₃SO₃H | Al-Acetat | Al-Nitrat | NH₄F | | | | |
| 14 | 7 | HEA / AS / VPS | 47 / 21 /32 | 21 | 4,5 | 3,4 | - | - | - | - | - | < 2 | 0-0,5 | 9,5 | |
| 15 | 7 | HEA / AS / VPS | 47 / 21 / 32 | 21 | 4,5 | 3,4 | - | 15 | 0,18 | - | - | < 2 | 0 | 6-6,5 | |
| 16 | 7 | HEA / AS / VPS | 47 / 21 /32 | 21 | 4,5 | 3,4 | - | - | - | 0,36 | - | < 2 | 0m | 6-6,5 | |
| 17 | 7 | HEA / AS / VPS | 47 / 21 /32 | 21 | 4,5 | 3,4 | - | - | - | 0,54 | - | < 2 | 0m | 7 | |
| 18 | 7 | HEA / AS / VPS | 47 / 21 / 32 | 21 | 4,5 | 3,4 | 14 | - | - | - | - | < 2 | 0m | 9 | |
| 19 | 7 | HEA / AS / VPS | 47 / 21 / 32 | 21 | 4,5 | 3,4 | 18 | - | - | - | - | < 2 | 0m | 8-8,5 | |
| 20 | 7 | HEA / AS / VPS | 47 / 21 / 32 | 20,5 | 4,5 | 3,4 | 22 | - | - | - | - | < 2 | 0smf | 7 | |
| 21 | 28 | HPA / AS / VPS | 59 / 12 / 29 | 21 | 4,5 | 3,4 | - | - | - | - | 1 | < 2 | 1-f | 8 | |
| 22 | 28 | HPA / AS / VPS | 59 / 12 / 29 | 21 | 4,5 | 3,4 | - | - | - | - | 3 | < 2 | 1lm | 8 | |
| 23 | 28 | HPA / AS / VPS | 59 / 12 / 29 | 21 | 4,5 | 3,4 | 12 | - | - | - | 3 | < 2 | 1,5 lm | 9,5 - 10 | |
| V5 | - | AS / MS / VPS | 60 / 20 / 20 | 19 | 4,5 | 3,4 | 15 | - | - | - | - | < 2 | 4sm | 9,5 - 10 | Polymer ohne Monomere (A) |
| V6 | - | AS / MS / VPS | 60 / 20 / 20 | 19 | 4,5 | 3,4 | 22,5 | - | - | - | - | < 2 | 3-3,5 smf | 9 | Polymer ohne Monomere (A) |
| V7 | - | AS / MS / VPS | 60 / 20 / 20 | 19 | 4,5 | 3,4 | 30 | - | - | - | - | < 2 | 3smf | 9-9,5 | Polymer ohne Monomere (A) |
| V8 | - | AS / MS / VPS | 60 / 20 / 20 | 19 | 4,5 | 3,4 | - | - | - | - | 3 | < 2 | 4 | 10 | Polymer ohne Monomere (A) |

Die Beispiele und Vergleichsbeispiele zeigen, dass durch die Verwendung der erfindungsgemäßen Copolymere mit den Monomeren (A) in Kombination mit Monomeren (B) und (C) die Optik der erhaltenen Passivierungsschichten im Vergleich zu Polymeren, welche nicht die funktionellen Monomere (A) enthalten deutlich verbessern lässt. Polymere, welche nur aus den Monomeren (A) bestehen, weisen weder eine ausreichende Korrosionsschutzwirkung auf, noch lassen sich Schichten ausreichender optischer Qualität erreichen. Es werden mindestens 10% phosphorhaltige Monomere (B) benötigt.

## Patentansprüche

1. Saure Zubereitung zum Passivieren von metallischen Oberflächen mit einem pH-Wert ≤ 5, umfassend mindestens Wasser sowie 0,1 bis 50 Gew. %, bezogen auf die Menge aller Komponenten der Zubereitung, mindestens eines wasserlöslichen oder wasserdispergierbaren, Phosphorsäure- und/oder Phosphonsäuregruppen umfassenden Copolymers, **dadurch gekennzeichnet, dass** das Copolymer aus folgenden monomeren Bausteinen aufgebaut ist:
(A) 15 bis 80 Gew. % mindestens eines Mono(meth)acrylsäureesters der allgemeinen Formel H₂C=CHR¹-COOR², wobei R¹ für H oder Methyl steht und R² für einen Rest ausgewählt aus der folgenden Gruppe:
(R^{2a}) Reste der allgemeinen Formel -(R³-O-)ₙ-R⁴, wobei n für eine natürliche Zahl von 2 bis 40 steht, R³ jeweils unabhängig voneinander für einen zweiwertigen, geradkettigen oder verzweigten Alkylrest mit 2 bis 4 C-Atomen und R⁴ für H oder einen geradkettigen oder verzweigten Alkylrest mit 1 bis 6 C-Atomen,
(R^{2b}) Reste der allgemeinen Formel -R⁵-Xₘ, wobei R⁵ für einen (m+1)-wertigen, geradkettigen oder verzweigten Alkylrest mit 1 bis 10 C-Atomen steht, X für eine funktionelle Gruppe ausgewählt aus der Gruppe von -OH, -OR⁶, -NH₂, -NHR⁶, -NR₂⁶, -N⁺HR₂Y⁻ oder-N⁺R₃Y⁻, wobei R⁶ für Methyl oder Ethyl, Y für ein einwertiges Anion und m für eine natürliche Zahl von 1 bis 6 steht, mit der Maßgabe, dass nicht mehr als eine funktionelle Gruppe X pro C-Atom in R⁵ vorhanden ist,
(R^{2c}) einen Mono- oder Oligosaccharidrest,
(B) 10 bis 75 Gew. % mindestens eines monoethylenisch ungesättigten Monomers, welches Phosphorsäure- und/oder Phosphonsäuregruppen und/oder Salze und/oder Ester davon umfasst,
(C) 5 bis 70 Gew. % mindestens eines monoethylenisch ungesättigten Monomers, welches mindestens eine COOH-Gruppe und/oder Salze davon umfasst, sowie
(D) 0 bis 20 Gew. % von weiteren -von (A) bis (C) verschiedenen- ethylenisch ungesättigten Monomeren,
wobei außer den Monomeren (A), (B), (C) sowie optional (D) keine weiteren Monomere vorhanden sind.

2. Zubereitung gemäß Anspruch 1, **dadurch gekennzeichnet, dass** es sich bei R² um mindestens einen Rest R^{2b}, ausgewählt aus der Gruppe von -CH₂-CH₂-OH, -CH₂-CH₂-CH₂-OH, -CH₂-CH₂-CH₂-CH₂-OH, -CH₂-CH(OH)-CH₃, -CH(CH₃)-CH₂-OH oder -CH₂-CH(OH)-CH₂-OH handelt.

3. Zubereitung gemäß Anspruch 1 oder 2, **dadurch gekennzeichnet, dass** es sich bei Monomer (B) um Vinylphosphonsäure handelt.

4. Zubereitung gemäß einem der Ansprüche 1 bis 3, **dadurch gekennzeichnet, dass** es sich bei Monomer (C) um (Meth)acrylsäure handelt.

5. Zubereitung gemäß einem der Ansprüche 1 bis 4, **dadurch gekennzeichnet, dass** die Zubereitung weiterhin mindestens ein dispergiertes Wachs umfasst.

6. Zubereitung gemäß einem der Ansprüche 1 bis 4, **dadurch gekennzeichnet, dass** die Formulierung weiterhin mindestens ein Metallion ausgewählt aus der Gruppe von Zn²⁺, Ca²⁺, Mg²⁺ und Al³⁺ umfasst.

7. Zubereitung gemäß einem der Ansprüche 1 bis 4, **dadurch gekennzeichnet, dass** es sich bei der Säure um mindestens eine Säure ausgewählt aus der Gruppe von H₃PO₄, HNO₃ oder Methansulfonsäure handelt.

8. Verfahren zum Passivieren von metallischen Oberflächen aus Zn, Mg, Al, Sn, Fe, Ni oder deren Legierungen durch Behandlung der Oberfläche mit einer sauren, wässrigen Zubereitung, **dadurch gekennzeichnet, dass** man zur Behandlung eine Formulierung gemäß einem der Ansprüche 1 bis 7 einsetzt.

9. Verfahren gemäß Anspruch 8, **dadurch gekennzeichnet, dass** es sich bei der Metalloberfläche um die Oberfläche eines Bandmetalls aus elektrolytisch verzinktem oder heißverzinktem Stahl handelt und man die Behandlung mittels eines kontinuierlichen Verfahrens vornimmt.

10. Verfahren gemäß Anspruch 8 oder 9, **dadurch gekennzeichnet, dass** es sich um ein chromfreies Verfahren handelt.

11. Verfahren gemäß einem der Ansprüche 7 bis 10, **dadurch gekennzeichnet, dass** die erhaltene Passivierungsschicht eine Dicke von 0,01 bis 3 µm aufweist.

12. Wasserlösliches oder wasserdispergierbares, Phosphorsäure- und/oder Phosphonsäuregruppen umfassendes Copolymer, **dadurch gekennzeichnet, dass** das Copolymer aus folgenden monomeren Bausteinen aufgebaut ist:
(A) 15 bis 80 Gew. % mindestens eines Mono(meth)acrylsäureesters der allgemeinen Formel H₂C=CHR¹-COOR², wobei R¹ für H oder Methyl steht und R² für einen Rest ausgewählt aus der folgenden Gruppe:
(R^{2a}) Reste der allgemeinen Formel -(R³-O-)ₙ-R₄, wobei n für eine natürliche Zahl von 2 bis 40 steht, R³ jeweils unabhängig voneinander für einen zweiwertigen, geradkettigen oder verzweigten Alkylrest mit 2 bis 4 C-Atomen und R⁴ für H oder einen geradkettigen oder verzweigten Alkylrest mit 1 bis 6 C-Atomen,
(R^{2b}) Reste der allgemeinen Formel -R⁵-Xₘ, wobei R⁵ für einen (m+1)-wertigen, geradkettigen oder verzweigten Alkylrest mit 1 bis 10 C-Atomen steht, X für eine funktionelle Gruppe ausgewählt aus der Gruppe von -OH, -OR⁶, -NH₂, -NHR⁶, -NR₂⁶, -N⁺HR₂Y⁻ oder-N⁺R₃Y⁻, wobei R⁶ für Methyl oder Ethyl, Y für ein einwertiges Anion und m für eine natürliche Zahl von 1 bis 6 steht, mit der Maßgabe, dass nicht mehr als eine funktionelle Gruppe X pro C-Atom in R⁵ vorhanden ist,
(R^{2c}) einen Mono- oder Oligosaccharidrest,
(B) 10 bis 75 Gew. % mindestens eines monoethylenisch ungesättigten Monomers, welches Phosphorsäure- und/oder Phosphonsäuregruppen und/oder Salze und/oder Ester davon umfasst,
(C) 5 bis 70 Gew. % mindestens eines monoethylenisch ungesättigten Monomers, welches mindestens eine COOH-Gruppe und/oder Salze davon umfasst, sowie
(D) 0 bis 20 Gew. % von weiteren -von (A) bis (C) verschiedenen- ethylenisch ungesättigten Monomeren,
wobei außer den Monomeren (A), (B), (C) sowie optional (D) keine weiteren Monomere vorhanden sind.

13. Copolymer gemäß Anspruch 12, **dadurch gekennzeichnet, dass** es sich bei R² um mindestens einen Rest R^{2b}, ausgewählt aus der Gruppe von -CH₂-CH₂-OH, -CH₂-CH₂-CH₂-OH, -CH₂-CH₂-CH₂-CH₂-OH, -CH₂-CH(OH)-CH₃, -CH(CH₃)-CH₂-OH oder -CH₂-CH(OH)-CH₂-OH handelt.

14. Copolymer gemäß Anspruch 12 oder 13, **dadurch gekennzeichnet**, es sich bei Monomer (B) um Vinylphosphonsäure handelt.

15. Copolymer gemäß einem der Ansprüche 12 bis 14, **dadurch gekennzeichnet, dass** es sich bei Monomer (C) um (Meth)acrylsäure handelt.

## Claims

1. An acidic preparation for passivating metallic surfaces with a pH ≤ 5, comprising at least water and also 0.1 to 50% by weight, based on the amount of all components of the preparation, of at least one water-soluble or water-dispersible copolymer comprising phosphoric and/or phosphonic acid groups, wherein the copolymer is composed of the following monomeric units:
(A) 15 to 80% by weight of at least one mono(meth)acrylic ester of the general formula H₂C=CHR¹-COOR², R¹ being H or methyl and R² being a radical selected from the following group:
(R^{2a}) radicals of the general formula - (R³-O-)ₙ-R⁴, n being a natural number from 2 to 40, R³ independently at each occurrence being a divalent, linear or branched alkyl radical having 2 to 4 C atoms, and R⁴ being H or a linear or branched alkyl radical having 1 to 6 C atoms,
(R^{2b}) radicals of the general formula -R⁵-Xₘ, R⁵ being an (m+1)-valent, linear or branched alkyl radical having 1 to 10 C atoms, X being a functional group selected from the group of -OH, -OR⁶, -NH₂, -NHR⁶, -NR₂⁶,-N⁺HR₂Y- or -N⁺R₃Y⁻, R⁶ being methyl or ethyl, Y being a monovalent anion, and m being a natural number from 1 to 6, with the proviso that there is not more than one functional group X per C atom in R⁵,
(R^{2c}) a mono- or oligosaccharide radical,
(B) 10 to 75% by weight of at least one monoethylenically unsaturated monomer which comprises phosphoric and/or phosphonic acid groups and/or salts and/or esters thereof,
(C) 5 to 70% by weight of at least one monoethylenically unsaturated monomer which comprises at least one COOH group and/or salts thereof, and
(D) 0 to 20% by weight of further ethylenically unsaturated monomers differing from (A) to (C),
wherein except for the monomers (A), (B), (C) and if appropriate (D) there are no monomers present.

2. The preparation according to claim 1, wherein R² is at least one radical selected from the group of-CH₂-CH₂-OH, -CH₂-CH₂-CH₂-OH, -CH₂-CH₂-CH₂-CH₂-OH, -CH₂-CH(OH)-CH₃, -CH(CH₃)-CH₂-OH or -CH₂-CH(OH)-CH₂-OH.

3. The preparation according to claim 1 or 2, wherein monomer (B) is vinylphosphonic acid.

4. The preparation according to any of claims 1 to 3, wherein monomer (C) is (meth)acrylic acid.

5. The preparation according to any of claims 1 to 4, wherein the preparation further comprises at least one dispersed wax.

6. The preparation according to any of claims 1 to 4, wherein the formulation further comprises at least one metal ion selected from the group of Zn²⁺, Ca²⁺, Mg²⁺ and Al³⁺.

7. The preparation according to any of claims 1 to 4, wherein the acid is at least one acid selected from the group of H₃PO₄, HNO₃ or methanesulfonic acid.

8. A process for passivating metallic surfaces comprising Zn, Mg, Al, Sn, Fe, Ni or alloys thereof by treating the surface with an acidic aqueous preparation, wherein a formulation according to any of claims 1 to 7 is used for the treatment.

9. The process according to claim 8, wherein the metal surface is the surface of a strip metal of electrogalvanized or hot dip galvanized steel and the treatment is carried out by means of a continuous process.

10. The process according to claim 8 or 9, being a chromium-free process.

11. The process according to any of claims 7 to 10, wherein the passivation layer obtained has a thickness from 0.01 to 3 µm.

12. A water-soluble or water-dispersible copolymer comprising phosphoric and/or phosphonic acid groups, wherein the copolymer is composed of the following monomeric units:
(A) 15 to 80% by weight of at least one mono(meth)acrylic ester of the general formula H₂C=CHR¹-COOR², R¹ being H or methyl and R² being a radical selected from the following group:
(R^{2a}) radicals of the general formula-(R³-O-)ₙ-R⁴, n being a natural number from 2 to 40, R³ independently at each occurrence being a divalent, linear or branched alkyl radical having 2 to 4 C atoms, and R⁴ being H or a linear or branched alkyl radical having 1 to 6 C atoms,
(R^{2b}) radicals of the general formula -R⁵-Xₘ, R⁵ being an (m+1)-valent, linear or branched alkyl radical having 1 to 10 C atoms, X being a functional group selected from the group of -OH, -OR⁶, -NH₂, -NHR⁶, -NR₂⁶,-N⁺HR₂Y⁻ or -N⁺R₃Y⁻, R⁶ being methyl or ethyl, Y being a monovalent anion, and m being a natural number from 1 to 6, with the proviso that there is not more than one functional group X per C atom in R⁵,
(R^{2c}) a mono- or oligosaccharide radical,
(B) 10 to 75% by weight of at least one monoethylenically unsaturated monomer which comprises phosphoric and/or phosphonic acid groups and/or salts and/or esters thereof,
(C) 5 to 70% by weight of at least one monoethylenically unsaturated monomer which comprises at least one COOH group and/or salts thereof, and
(D) 0 to 20% by weight of further ethylenically unsaturated monomers differing from (A) to (C),
wherein except for the monomers (A), (B), (C) and if appropriate (D) there are no monomers present.

13. The copolymer according to claim 12, wherein R² is at least one radical R^{2b} selected from the group of -CH₂-CH₂-OH, -CH₂-CH₂-CH₂-OH, -CH₂-CH₂-CH₂-CH₂-OH, -CH₂-CH(OH)-CH₃, -CH(CH₃)-CH₂-OH or -CH₂-CH(OH)-CH₂-OH.

14. The copolymer according to claim 12 or 13, wherein monomer (B) is vinylphosphonic acid.

15. The copolymer according to one of claims 12 to 14, wherein monomer (C) is (meth)acrylic acid.

## Revendications

1. Préparation acide pour la passivation de surfaces métalliques ayant un pH ≤ 5, comprenant au moins de l'eau, ainsi que 0,1 à 50 % en poids, par rapport à la quantité de tous les composants de la préparation, d'au moins un copolymère comprenant des groupes acide phosphorique et/ou acide phosphonique, soluble dans l'eau ou dispersible dans l'eau, **caractérisée en ce que** le copolymère est formé par les constituants monomères suivants :
(A) 15 à 80 % en poids d'au moins un ester de l'acide mono(méth)acrylique de formule générale H₂C=CHR¹-COOR², R¹ représentant H ou méthyle et R² représentant un radical choisi dans le groupe suivant :
(R^{2a}) les radicaux de formule générale-(R³-O-)ₙ-R⁴, n représentant un nombre naturel de 2 à 40, les R³ représentant chacun indépendamment les uns des autres un radical alkyle bivalent, linéaire ou ramifié, de 2 à 4 atomes C, et R⁴ représentant H ou un radical alkyle linéaire ou ramifié de 1 à 6 atomes C,
(R^{2b}) les radicaux de formule générale -R⁵-Xₘ, R⁵ représentant un radical alkyle (m+1)-valent, linéaire ou ramifié, de 1 à 10 atomes C, X représentant un groupe fonctionnel choisi dans le groupe constitué par
- OH, -OR⁶, -NH₂, -NHR⁶, -NR₂⁶, -N⁺HR₂Y- ou -N⁺R₃Y-, R⁶ représentant méthyle ou éthyle, Y représentant un anion monovalent et m représentant un nombre naturel de 1 à 6, à condition que pas plus d'un groupe fonctionnel X par atome C dans R⁵ ne soit présent,
(R^{2c}) un radical mono- ou oligosaccharide,
(B) 10 à 75 % en poids d'au moins un monomère monoéthyléniquement insaturé, qui comprend des groupes acide phosphorique et/ou acide phosphonique et/ou leurs sels et/ou esters,
(C) 5 à 70 % en poids d'au moins un monomère monoéthyléniquement insaturé, qui comprend au moins un groupe COOH et/ou ses sels, ainsi que
(D) 0 à 20 % en poids d'autres monomères éthyléniquement insaturés différents de (A) à (C),
aucun monomère supplémentaire n'étant présent en plus des monomères (A), (B), (C) et éventuellement (D).

2. Préparation selon la revendication 1, **caractérisée en ce que** R² est au moins un radical R^{2b}, choisi dans le groupe constitué par -CH₂-CH₂-OH, -CH₂-CH₂-CH₂-OH, -CH₂-CH₂-CH₂-CH₂-OH, -CH₂-CH(OH)-CH₃, -CH (CH₃)-CH₂-OH ou -CH₂-CH(OH)-CH₂-OH.

3. Préparation selon la revendication 1 ou 2, **caractérisée en ce que** le monomère (B) est l'acide vinylphosphonique.

4. Préparation selon l'une quelconque des revendications 1 à 3, **caractérisée en ce que** le monomère (C) est l'acide (méth)acrylique.

5. Préparation selon l'une quelconque des revendications 1 à 4, **caractérisée en ce que** la préparation comprend en outre au moins une cire dispersée.

6. Préparation selon l'une quelconque des revendications 1 à 4, **caractérisée en ce que** la formulation comprend en outre au moins un ion métallique choisi dans le groupe constitué par Zn²⁺, Ca²⁺, Mg²⁺ et Al³⁺.

7. Préparation selon l'une quelconque des revendications 1 à 4, **caractérisée en ce que** l'acide est au moins un acide choisi dans le groupe constitué par H₃PO₄, HNO₃ ou l'acide méthanesulfonique.

8. Procédé de passivation de surfaces métalliques en Zn, Mg, Al, Sn, Fe, Ni ou leurs alliages par traitement de la surface avec une préparation aqueuse acide, **caractérisé en ce qu'**une formulation selon l'une quelconque des revendications 1 à 7 est utilisée pour le traitement.

9. Procédé selon la revendication 8, **caractérisé en ce que** la surface métallique est la surface d'une bande métallique en acier galvanisé électrolytiquement ou galvanisé à chaud, et le traitement est réalisé par un procédé continu.

10. Procédé selon la revendication 8 ou 9, **caractérisé en ce qu'**il s'agit d'un procédé sans chrome.

11. Procédé selon l'une quelconque des revendications 7 à 10, **caractérisé en ce que** la couche de passivation obtenue présente une épaisseur de 0,01 à 3 µm.

12. Copolymère comprenant des groupes acide phosphorique et/ou acide phosphonique, soluble dans l'eau ou dispersible dans l'eau, **caractérisé en ce que** le copolymère est formé par les constituants monomères suivants :
(A) 15 à 80 % en poids d'au moins un ester de l'acide mono(méth)acrylique de formule générale H₂C=CHR¹-COOR², R¹ représentant H ou méthyle et R² représentant un radical choisi dans le groupe suivant :
(R^{2a}) les radicaux de formule générale -(R³-O-)ₙ-R⁴-n représentant un nombre naturel de 2 à 40, les R³ représentant chacun indépendamment les uns des autres un radical alkyle bivalent, linéaire ou ramifié, de 2 à 4 atomes C, et R⁴ représentant H ou un radical alkyle linéaire ou ramifié de 1 à 6 atomes C,
(R^{2b}) les radicaux de formule générale -R⁵-Xₘ, R⁵ représentant un radical alkyle (m+1)-valent, linéaire ou ramifié, de 1 à 10 atomes C, X représentant un groupe fonctionnel choisi dans le groupe constitué par -OH, -OR⁶, -NH₂, -NHR⁶, -NR₂⁶, -N⁺HR₂Y- ou -N⁺R₃Y⁻, R⁶ représentant méthyle ou éthyle, Y représentant un anion monovalent et m représentant un nombre naturel de 1 à 6, à condition que pas plus d'un groupe fonctionnel X par atome C dans R⁵ ne soit présent,
(R^{2c}) un radical mono- ou oligosaccharide,
(B) 10 à 75 % en poids d'au moins un monomère monoéthyléniquement insaturé, qui comprend des groupes acide phosphorique et/ou acide phosphonique et/ou leurs sels et/ou esters,
(C) 5 à 70 % en poids d'au moins un monomère monoéthyléniquement insaturé, qui comprend au moins un groupe COOH et/ou ses sels, ainsi que
(D) 0 à 20 % en poids d'autres monomères éthyléniquement insaturés différents de (A) à (C),
aucun monomère supplémentaire n'étant présent en plus des monomères (A), (B), (C) et éventuellement (D).

13. Copolymère selon la revendication 12, **caractérisé en ce que** R² est au moins un radical R^{2b}, choisi dans le groupe constitué par -CH₂-CH₂-OH, -CH₂-CH₂-CH₂-OH, -CH₂-CH₂-CH₂-CH₂-OH, -CH₂-CH (OH)-CH₃, -CH (CH₃)-CH₂-OH ou -CH₂-CH(OH)-CH₂-OH.

14. Copolymère selon la revendication 12 ou 13, **caractérisé en ce que** le monomère (B) est l'acide vinylphosphonique.

15. Copolymère selon l'une quelconque des revendications 12 à 14, **caractérisé en ce que** le monomère (C) est l'acide (méth)acrylique.
